(19) Europäisches Patentamt / European Patent Office / Office européen des brevets

(11) **EP 2 426 508 B1**

(12) **EUROPEAN PATENT SPECIFICATION**

(45) Date of publication and mention
of the grant of the patent:
**28.10.2020  Bulletin 2020/44**

(21) Application number: **11180231.0**

(22) Date of filing: **06.09.2011**

(51) Int Cl.:
*G01S 13/87* *(2006.01)*     *G01S 15/87* *(2006.01)*
*G01S 13/46* *(2006.01)*     *G01S 15/46* *(2006.01)*
*G01S 7/292* *(2006.01)*     *G01S 7/527* *(2006.01)*
*G01S 7/536* *(2006.01)*     *G01S 17/87* *(2020.01)*
*G01S 15/89* *(2006.01)*

(54) **Target detection system, detection method, and detection information processing program**

Zielerkennungssystem, Erkennungsverfahren und Verarbeitungsprogramm für die erkannte Information

Système de détection de cible, procédé de détection et programme de traitement d'informations de détection

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **06.09.2010  JP 2010198725**

(43) Date of publication of application:
**07.03.2012  Bulletin 2012/10**

(73) Proprietor: **NEC Corporation
Minato-ku,
Tokyo 108-8001 (JP)**

(72) Inventor: **Shiba, Hisashi
Minato-ku, Tokyo 108-8001 (JP)**

(74) Representative: **Glawe, Delfs, Moll
Partnerschaft mbB von
Patent- und Rechtsanwälten
Postfach 13 03 91
20103 Hamburg (DE)**

(56) References cited:
**WO-A1-01/09641          WO-A1-2008/031896
WO-A2-2010/067057     US-A- 4 806 936
US-A- 5 486 833          US-A1- 2005 146 433**

EP 2 426 508 B1

**Description**

BACKGROUND OF THE INVENTION

1. Field of the Invention

The present invention relates to a target detection system which transmits a prescribed target detection signal constituted with a radio wave, a sonic wave, or a light wave, and captures a reflected wave from targets to estimate the position of the targets. More specifically, the present invention relates to a target detection system, a detection method, and a detection information processing program, which are capable of detecting targets even in a case where there are a plurality of reflection paths from targets and the intensity of the reflected wave is weak (S/N ratio is low).

2. Description of the Related Art

Radars, sonars, lidars, or the like are widely used as the devices for acquiring the position of targets through transmitting waveform information such as a radio wave or a sound wave and measuring the reflected wave from the targets.

Radars, sonars, lidars, or the like are effective when there is nothing other than the targets that reflects the waves. However, when there is an obstacle or the like in the surroundings or in the middle of the path, those waves may be multiple-reflected and the position of the targets may not be detected precisely or may not even be detected at all. As an example of cases where the influence of the multiple-path is prominent may be a shallow area of the sea. In a shallow area of the sea, a sound wave is multiple-reflected at the seabed and sea surface, so that targets cannot be detected by sonars.

As a related technique for detecting targets, there is known a system which uses a plurality of transmitters/receivers by hanging each of the plurality of transmitters/receivers on the transmitter side and receiver side in an array under the water for detecting an object existing on the seabed or buried in the seabed (Japanese Unexamined Patent Publication 2008-249532 (Patent Document 1)).

This object detection system is structured to bury a plurality of pseudo sound sources along the seabed to detect an object buried in the seabed, to transmit sound waves equivalent to reflected propagation waveforms acquired by each of the pseudo sound sources sequentially from a wave transmitting array on one side, and to receive those by a wave receiving array on the other side provided via the water.

Further, it is structured to regenerate a case where the positions of each of the pseudo sound sources are changed continuously to transmit transmission signals from the wave transmitting array on one side, and to specify the reflected waves from the buried object according to the extent of sensitivity and the timing of reception of the reflected propagation waveform. It is structured to use the whole part of the wave transmitting array and the receiving array at all times.

Further, as a technique for detecting targets by transmitting and receiving electromagnetic waves, known is a mobile object detection system which uses a plurality of radar heads to detect moving direction and moving speed of an object crossing in front of a traveling vehicle (Japanese Unexamined Patent Publication 2009-041981 (Patent Document 2)).

This mobile object detection system is designed to include two radar heads which transmit electromagnetic waves and receive electromagnetic waves reflected at an object at different positions so as to acquire the moving speed and moving direction of the object at the point of detecting the object.

In the meantime, nowadays, as a method for overcoming the multiple-path issue directly, a technique as depicted in "Y. Tsurugaya, T. Kikuchi and K. Mizutani, "Focal Depth Shifting of Phase-Conjugate Wave in Pekeris Waveguide", J. J. A. P., Vol. 47, No. 5, 2008, pp. 4339-4343" (Non-Patent Document 1) is proposed, i.e., a time reversal method which performs time reversal on a reception signal and transmits the acquired signal.

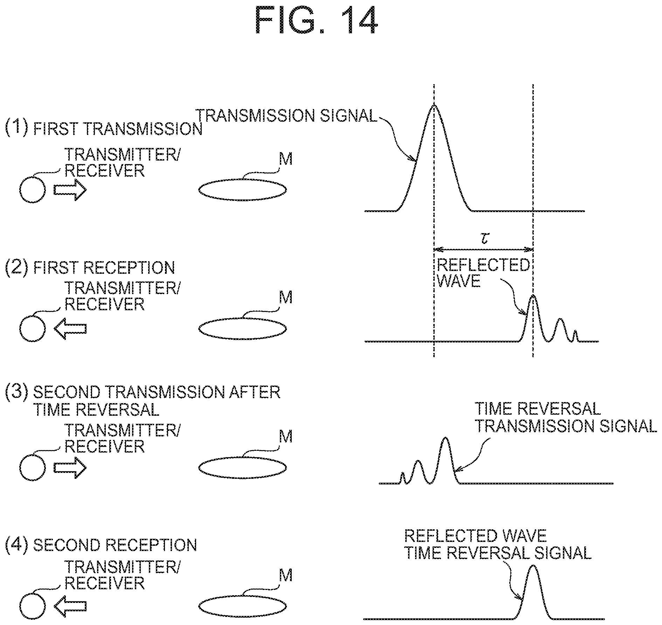

FIG. 14 shows a time reversal method of a case with a high S/N ratio (a case where reflection from targets is strong). With this time reversal method, first, first transmission of waveform information such as a radio wave or a sonic wave from a signal transmitter/receiver towards a target M (see FIG. 14A) is conducted, and first reception of a first reflected wave signal (including waveform distortion and the like) reflected at the target M is conducted (see FIG. 14B).

Subsequently, a reversal signal is acquired by time-reversing the reflected wave signal received first, a second transmission (re-transmission) of the reversal signal is conducted towards the target M (see FIG. 14C), and a second reflected wave signal (reflected wave reversal signal) reflected from the target M thereby is received (see FIG. 14D).

The second reflected wave signal (reflected wave reversal signal) is in a state where the waveform distortion generated during propagation is offset, so that the peak thereof becomes clear. Thus, the peak can be easily found. Further, the arrival time $\tau$ can be found in the case of FIG. 14, so that it is possible to estimate the distance from the target M and detect the position of the target M.

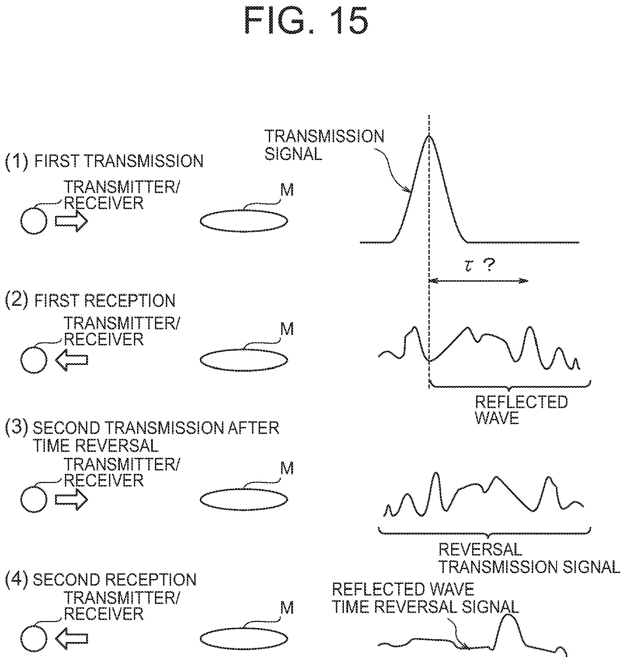

However, the time reversal method disclosed in Non-Patent Document 1 mentioned above cannot specify the distance with respect to the targets when the reflection from the targets is weak (in a case of low S/N ratio) so that the position of the targets cannot be specified, even though it is effective in an environment of multiple reflections. This will be described by referring to FIG. 15.

FIG. 15 shows a time reversal method used in a case of low S/N ratio.

First, referring to FIG. 15A, a first transmission of a radio wave, an ultrasonic wave, or the like towards the targets from the transmitter/receiver is conducted as in the case of FIG. 14A, and a first reception of a first reflected wave reflected at the target M thereby is conducted.

Regarding the reflected wave that can be received, there are some peaks of almost same heights (see FIG. 15B). This is a case where the reflected wave comes to have a low S/N ratio, since the sound wave propagation environment is an environment with notable noises.

Thus, regarding a reversal signal acquired by time-reversing the reflected wave signal received first, there are also some peaks of almost same heights.

Subsequently, a second transmission (re-transmission) of the reversal signal is conducted towards the target M (see FIG. 15C), and a second reflected wave signal (reflected wave reversal signal) reflected from the target M thereby is received (see FIG. 15D).

Regarding the second reflected wave (a reflected wave reversal signal) shown in FIG. 15D, something like a peak can be acquired compared to the case of the reflected waveform information shown in FIG. 15D. However, it is not possible to specify a peak on the transmission side at the time of re-transmission in particular from FIG. 15C, so that the arrival time τ is unknown. Thus, the position of the target M cannot be detected under such environment where the S/N ratio is low.

Related to this kind of issues, an issue regarding estimation of the distance from the target M has not been sufficiently recognized.

Further, the related techniques according to Patent Documents 1 and 2 described above are in common in respect that both detect the targets. However, both simply disclose the basic principle regarding detection of targets. Both do not disclose a time reversal method and have no relevancy in regards to detection of targets using a reception signal that cannot be identified from a noise because the reception level is low.

Further prior art is disclosed in WO 2010/067057 A2, WO 01/09641 A1, WO 2008/031896 A1, US 4806936 A, US 5486833 A and US 2005/146433 A1.

An exemplary object of the present invention is to provide a target detection system including a plurality of target-detecting transmitters/receivers constituted with radars, sonars, or lidars, which is capable of effectively estimating the position of a target even when a reflected wave from the target is weak under an environment where multiple reflections are prominent, and to provide a detection method and a detection information processing program.

SUMMARY OF THE INVENTION

The invention is defined in the independent claims. Advantageous embodiments are set out in the dependent claims.

BRIEF DESCRIPTION OF THE DRAWINGS

FIG. 1 is a block diagram showing the structure of a target detection system according to a first exemplary embodiment of the preset invention;
FIG. 2 is a block diagram showing the structure of a transmitter/receiver which constitutes a part of the target detection system disclosed in FIG. 1;
FIGS. 3A and 3B show charts for describing the principle, which illustrates a case of specifying a target by the target detection system disclosed in FIG. 1, in which FIG. 3A is an explanatory chart showing an example of a case where the azimuth of the target is acquired by a single transmitter/receiver and FIG. 3B is an example of a case where the position of the target is acquired by two transmitters/receivers;
FIG. 4 is an explanatory chart showing an example of a case which specifies a target on a secondary plane by using two transmitters/receivers of the target detection system disclosed in FIG. 1;
FIG. 5 is an explanatory chart showing an example of a case which specifies a target on a secondary plane by using three transmitters/receivers of the target detection system disclosed in FIG. 1;
FIG. 6 is an explanatory chart showing an example of a case which specifies the position of a target that is on a straight line connecting the two transmitters/receivers of FIG. 5;
FIG. 7 is an explanatory chart showing an example of a case which specifies the position of a target that is within a three-dimensional space by using two transmitters/receivers of the target detection system disclosed in FIG. 1, when the target exists within the three-dimensional space;

FIG. 8 is an explanatory chart showing an example of a case which specifies the position of a target that is within a three-dimensional space by using three transmitters/receivers of the target detection system disclosed in FIG. 1, when the target exists within the three-dimensional space;

FIG. 9 is a flowchart showing basic operations of the target detection system disclosed in FIG. 1;

FIG. 10 is a flowchart showing detailed operations of a wave transmitting/receiving machine part in the flowchart disclosed in FIG. 9;

FIG. 11 is a flowchart showing setting operations of the position and attitude of the wave transmitting/receiving machine main body completed before executing the flowchart disclosed in FIG. 9;

FIG. 12 is an explanatory chart showing an example of a positional relation between an area B that is swept by the two transmitters/receivers and an area A for detecting a target;

FIG. 13 is an explanatory chart showing an example of a positional relation regarding an area B as well as an area C swept by the three transmitters/receivers and an area A for detecting a target;

FIG. 14 shows explanatory charts showing an example of applying a time reversal method of a case with a high S/N ratio according to a related technique; and

FIG. 15 shows explanatory charts showing an example of applying a time reversal method of a case with a low S/N ratio according to a related technique.

## DETAILED DESCRIPTION OF THE PREFERRED EMBODIMENTS

Next, each exemplary embodiment regarding a target detection system of the present invention will be described in details by referring to the accompanying drawings.

(FIRST EXEMPLARY EMBODIMENT)

First, the overall structural contents will be described. Thereafter, a technique for detecting a target M under a poor environment by using two transmitters/receivers 1, 2 and a technique for detecting a target M using three transmitters/receivers 1, 2, 3 will be described while the distances thereof are considered unknown.

(Overall Structure)

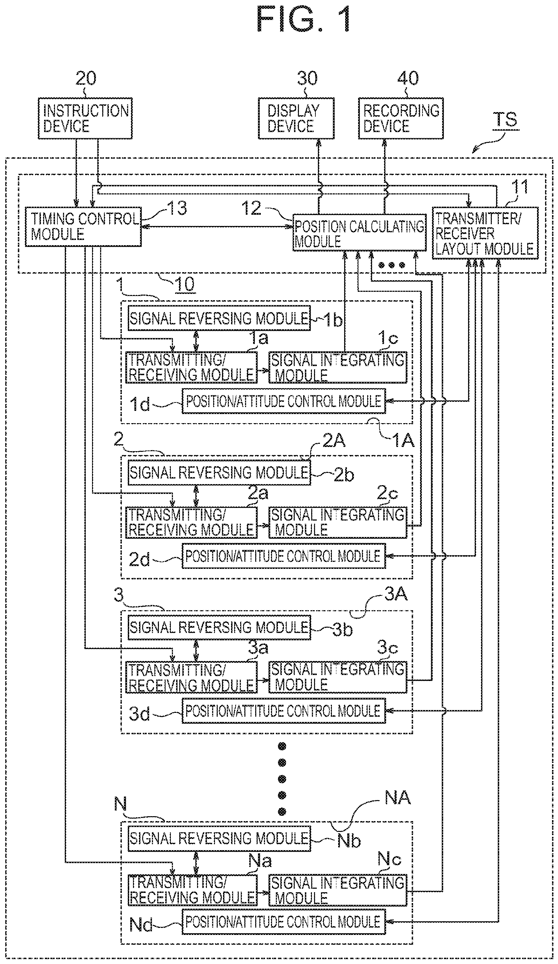

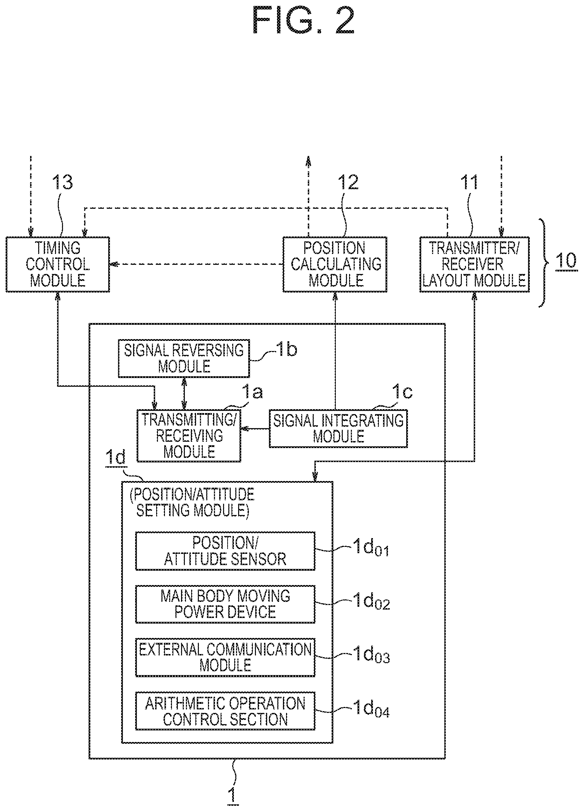

First, as shown in FIG. 1 and FIG. 2, a target detection system TS according to the first exemplary embodiment includes N-pieces (at least two) of transmitters/receivers 1, 2, 3, ---, N, and a main control device 10 which individually controls overall actions of each of the transmitters/receivers 1, 2, 3, ---, N (written as 1 to N hereinafter). Each of the transmitters/receivers 1 to N is constituted with a radar, sonar, or lidar to be used for searching a same target.

Among those, the main control device 10 is constituted by including: a transmitter/receiver arranging module 11 which individually sets positions and attitudes of each of the transmitters/receivers 1 to N and gives instructions to each of the transmitters/receivers 1 to N regarding the setting of the actual layout positions and attitudes of each of the transmitters/receivers 1 to N; a position calculating module 12 which calculates the position of the target M based on information sent from each of the transmitters/receivers 1 to N, i.e., based on the azimuth information of the target M captured by each of the transmitters/receivers 1 to N; and a timing control module (signal output control module) 13 which gives an instruction regarding operation timings of transmission/reception of signals of each of the transmitters/receivers 1 to N.

As will be described in a more specific manner, the position calculating module 12 is provided with an azimuth information superimposing processing function which performs superimposing processing of reception signals according to a plurality of pieces of reception information (or azimuth information) captured by each of the transmitters/receivers 1 to N by transmitting/receiving the transmission signals regarding the target on the basis of the layout positions (coordinate positions) of each of the transmitters/receivers 1 to N. Further, the position calculating module 12 is provided with a target position estimating function which estimates a position (coordinate position) of a high reflection level acquired by executing the reception signal superimposing processing function as the position of the target M.

The first exemplary embodiment is structured to place a plurality of the same target detection transmitters/receivers each being constituted with a radar, sonar, lidar, or the like at different positions and perform superimposing processing on the information regarding the reflected waves from the target M acquired by each of the transmitters/receivers 1 to N by using the position calculating module 12 as described above. Thus, it is possible to acquire the reception wave intensity of a higher level than the surrounding noises even when the level of the reception wave from the target M received at a single transmitter/receiver is weak under an environment where the multiple reflections are prominent because of obstacles and the like, since the reception waves received at the plurality of transmitters/receivers are superimposed. This makes it possible to effectively and promptly estimate and detect the position of the target.

Note here that the first exemplary embodiment may be structured to select two specific transmitters/receivers and to execute control operations for each of the structural modules by the main control device 10 when operating the target detection system TS. Further, it is also possible to employ a structure with which a third transmitter/receiver having the same function as that of the two transmitters/receivers 1, 2 but being placed at a different layout position is selected further, and the main control device 10 executes the control operations for each of the structural modules directed to each of the first to third transmitters/receivers 1, 2, 3.

(Transmitter/Receiver)

Next, each of the transmitters/receivers 1 to N will be described in a specific manner.

Each of the transmitters/receivers 1 to N according to the first exemplary embodiment is all constituted with a transmitter/receiver having a same function. Therefore, the transmitter/receiver 1 will simply be described hereinafter.

As shown in FIG. 1, the transmitter/receiver 1 includes: a transmitting/receiving module 1a constituted with a radar, sonar, or lidar for transmitting/receiving a prescribed signal for detecting a target; a signal reversing module 1b which accumulates waveform information received at the transmitting/receiving module 1a, performs time reversal on the accumulated waveform information at a timing designated by the transmitting/receiving module 1a, and transmits it as a transmission time reversal signal to the transmitting/receiving module 1a; a signal integrating module 1c which sections the reception signal received at the transmitting/receiving module 1a by a time range and an azimuth range designated in advance, integrates each of those, and transmits the integrated information to the position calculating module 12; a transmitter/receiver main body 1A which houses and holds each of those modules; and a position/attitude setting control module Id which specifies information regarding the position and attitude of the transmitter/receiver main body 1A based on GPS, placing positional information, and past movement records, and transmits it to the transmitter/receiver layout module 11.

Among those, the transmitting/receiving module 1a is formed with an information collectable radar, sonar, or lidar constituted with a single sensor element or a plurality of sensor elements which receive waves such as a radio wave, a sonic wave, or a light wave.

This transmitting/receiving module 1a stores in advance waveform information that is time-series fluctuations of a wave such as wavelength, amplitude, phase, and modulation method of a wave to be transmitted such as a radio wave, sonic wave, or a light wave.

In that case, different frequency bands are set for each of the transmitters/receivers in the first exemplary embodiment for discriminating the waveform information among each of the transmitters/receivers 1 to N. However, it is also possible to use spread spectrum signals of different codes from each other. Further, it is also possible to employ frequency hopping with which the frequency changes intermittently to have the frequency hopped for each of the transmitters/receivers.

Further, upon receiving a transmission timing designated in advance from the timing control module (signal output control module) 13 of the main control device 10, the transmitting/receiving module 1a of the transmitter/receiver 1 is structured to read out the waveform information stored in advance at the transmission timing, amplifies the amplitude of the read out waveform information with an amplification rate given in advance, and transmits it as a transmission signal towards the target M,.

This transmission signal is the same as the waveform information shown in FIG. 14A under an environment with a small amount of noise, for example. Meanwhile, this transmission signal is the same as the waveform information shown in FIG. 15A under an environment with a large amount of noise. In this regards, the transmission signals in both environments are the same.

Note here that the each of the transmitting/receiving modules 1a to Na of each of the plurality of transmitters/receivers 1 to N in the first exemplary embodiment is structured to operate according to an instruction of the timing control module (signal output control module) 13 of the main control device 10 to specify and transmit/receive a transmission signal regarding waveform information that is different mutually from transmission signals transmitted from other transmitters/receivers as a target detection signal (used frequency bands are different). Thus, even when each of the transmitters/receivers 1 to N operates simultaneously, there is no confusion occurred at the time of reception in each of the transmitters/receivers 1 to N.

In that case, the transmitting/receiving module 1a of each of the plurality of transmitters/receivers 1 to N may be structured to operate according to an instruction of the timing control module (signal output control module) 13 of the main control device 10 and to operate at different timings mutually with respect to the other transmitters/receivers 1 to N so as to specify and transmit/receive a transmission signal regarding prescribed waveform information as a target detection signal.

This provides such an advantage that it becomes possible to specify and transmit/receive the transmission signals regarding the same waveform information transmitted from each of the transmitters/receivers 1 to N as the target detection signals.

While the first exemplary embodiment is structured in this case to specify and transmit/receive the transmission signal regarding waveform information that is different mutually from transmission signals transmitted from other transmitters/receivers as a target detection signal for the transmission signals transmitted from each of the transmitters/receivers 1 to N, it is also possible to use the same waveform information by shifting the timings of transmissions.

Further, this transmitting/receiving module 1a after transmitting the transmission signal starts reception after waiting for a specific time given in advance in order to avoid a strong reflection caused due to media such as the air and water in the vicinity of the transmitting/receiving module 1a or caused due to floating matters and the like contained in those media.

Further, the transmitting/receiving module 1a is structured to receive a reflected wave from the target M and to store it as a reception signal. The stored reception signal is the same as the reflected wave shown in FIG. 14B under a fine environment, for example, while it is the same as the reflected wave shown in FIG. 15B under a bad environment where the S/N ratio is low.

Note here that the transmitting/receiving module 1a according to the first exemplary embodiment is structured by including a function which estimates arriving azimuth and time of the direct wave based on the positions and transmission time of the other transmitters/receivers 2, 3, ---, N and stop reception from the corresponding azimuth during that time in order to avoid direct waves transmitted from the transmitting/receiving modules 2a, 3a, ---, Na of the other transmitters/receivers 2, 3, ---, N at the time of reception.

Further, when the transmitting/receiving module 1a is formed with a radar, sonar, lidar, or the like by placing a plurality of sensor elements, those are placed at a half-wavelength interval on a straight line in general. However, there is no limit set in terms of the layout.

For example, the sensor elements as a plurality of transmitting/receiving modules 1a may be placed in a ring form, placed in a spherical form, or placed in a stereoscopic lattice-like form that is very similar to crystal lattice to be formed with radars, sonars, lidars, or the like. Each of those sensor elements being arranged has the same sensitivity characteristic and wavelength characteristic in most of the cases. However, sensor elements with different sensitivity characteristics and wavelength characteristics may be arranged as well.

Next, the signal reversing module 1b of the transmitter/receiver 1 has a function which accumulates reception information regarding the reception signal acquired by the transmitting/receiving module 1a at the timing designated by the transmitter/receiver 1.

In this case, the transmitting/receiving module 1a requests output of a reversal timing signal to the signal reversing module 1b, when the reversal timing is designated by the timing control module 13 of the main control device 10.

In this case, at the timing designated by the timing control module 13 or when a reflection signal of the first transmission signal is received, the signal reversing module 1b has a function which reads out reception waveform information of the reception signal within a designated time range according to a procedure programmed in advance, performs time reversal, and sends out the time-reversed reception signal to the transmitting/receiving module 1a as a re-transmission signal.

As a method for performing time reversal, the waveform information accumulated sequentially on a memory in order of time is read out from the latest to the oldest in a reversed manner.

Further, the transmitting/receiving module 1a has a function which amplifies the time-reversed reception signal supplied from the signal reversing module 1b and re-transmits it as a time reversal transmission signal (re-transmission signal) towards the target M. In this case, the time reversal transmission signal to be transmitted is of a waveform close to the reflected wave shown in FIG. 14C under a fine environment, for example, while it is of a waveform close to the reflected wave shown in FIG. 15C under a bad environment where the S/N ratio is low.

Further, the transmitting/receiving module 1a is structured to receive the reflected wave from the target M for the time reversal transmission signal and store it as a reflected time reversal signal. The reflected wave from the target M is similar to the reflected wave shown in FIG. 14D under a fine environment, for example, while it is similar to the reflected wave shown in FIG. 15D under a bad environment where the S/N ratio is low.

The signal integrating module 1 c of the transmitter/receiver 1 has a function which sections the reflected time reversal signal received at the transmitting/receiving module 1a by a time range and an azimuth range designated in advance, integrates each of those, calculates the intensity of the wave by each azimuth and each distance, and transmits those to the position calculating module 12 as the waveform intensities.

The position/attitude control module 1d of the transmitter/receiver 1 acquires the position of the transmitter/receiver 1 from GPS, matching with a topographic map or the like, or a record of actions taken theretofore, and acquires attitude information of the transmitter/receiver 1 from an attitude sensor or a record of actions taken theretofore. Further, the position/attitude control module 1d is structured to store information regarding the position and attitude of the transmitter/receiver 1 and give it to the transmitter/receiver layout module 11.

The position/attitude control module 1d is structured to move and set the transmitter/receiver 1 itself to the position designated by the transmitter/receiver layout module 11 by a power device equipped in advance. As shown in FIG. 2, the position/attitude control module Id includes: a position/attitude sensor $1d_{01}$ which monitors the position and attitude of the transmitter/receiver 1 by using a GPS, gyroscope, compass, or the like; and a main body moving power device $1d_{02}$ such as a screw, propeller drive (in a case of underwater), jet blower, rocket blower, or the like (in a case of space) for moving the transmitter/receiver 1 itself to set a difference with respect to the positional information and the attitude information on a three-dimensional coordinates of X-Y-Z in the instruction information to be substantially zero based on the transmitter/receiver information acquired by the position/attitude sensor $1d_{01}$.

Further, the position/attitude control module Id is structured by including a radio or wired external communication module $1d_{03}$ which transmits position/attitude data to the main control device 10 and receives a moving instruction, and a computer (arithmetic operation control unit) $1d_{04}$ which controls each action of the position/attitude sensor $1d_{01}$, the main body moving power device $1d_{02}$, and the external communication module $1d_{03}$. Note here that the power device may be achieved by such a form that pulls the transmitters/receivers from outside, for example. The transmitter/receiver layout module 11 is structured to acquire the positional information and the attitude information of each of the transmitters/receivers 1 to N from the corresponding position/attitude control module Id and to inform the information of the position and attitude designated in advance regarding the transmitter/receiver 1 or the information regarding the positions and attitudes of each of the transmitters/receivers 1 to N designated from an external instruction device 20 to the corresponding position/attitude control module 1d, 2d, 3d, ---, Nd.

(Explanation of Theoretical Contents and Specification of Azimuth Information)

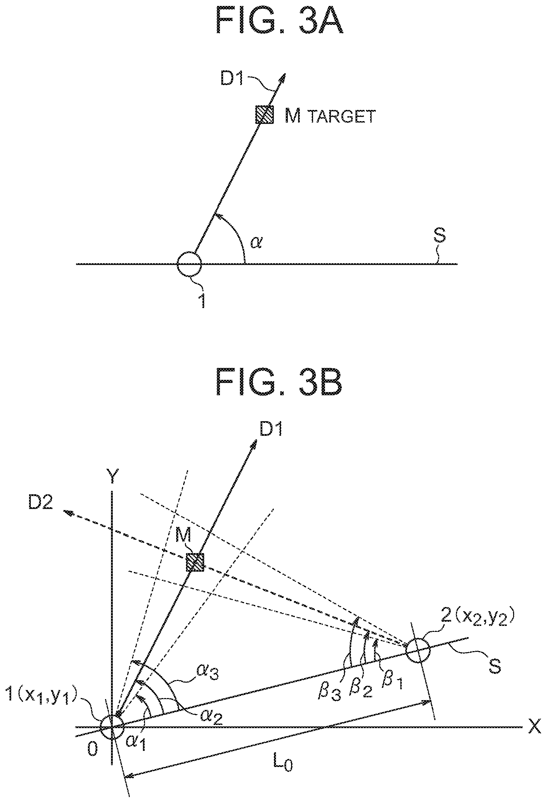

Now, described are the basic structural contents of the first exemplary embodiment, i.e., the theoretical contents that make it possible to capture the target M and specify the existing position thereof (candidate coordinate) by using the two transmitters/receivers 1, 2 (a case where N = 2) in a case where measurement of the distance of the reflected wave is impossible under a bad environment (low S/N ratio), by referring to FIG. 3.

The contents of the new technique disclosed herein are the contents directed to specification of the azimuth information of the target M in a case where the measurement of the distance is impossible. Thus, the new technique can be directly applied even to cases where there are three or more of the transmitters/receivers.

Specification of the azimuth of the target in a case where the measurement of the distance of the reflected wave is impossible under a bad environment (low S/N ratio) will first be described by referring to FIG. 3 and FIG. 15.

First, in FIG. 3A, detection of the target M existing within a same horizontal plane is assumed for the sake of explanations. In FIG. 3A, angle $\alpha$ shows an azimuth angle for transmitting a detection signal on the basis of a segment S. Further, the azimuth angle $\alpha$ is set to be able to transmit signals by sequentially changing the azimuth of signal transmission by reciprocally scanning the directions between 0 degree and 180 degrees on the horizontal plane. Furthermore, as a detection area, the horizontal direction located on the upper side of the segment S in FIG. 3A is taken as a target range.

In FIG. 3A, when the target M is captured at a current position at the azimuth angle $\alpha$, the transmission signal of the first transmission and the reflected wave thereof (reception signal) come to have a signal waveform equivalent to the content shown in FIG. 14B, for example, when the S/N ratio is high, and come to have a signal waveform equivalent to the content shown in FIG. 15B, for example, when the S/N ratio is low.

In this case, the reflected wave from the target M cannot be discriminated with the signal waveform of the content shown in FIG. 15 that is a case with the low S/N ratio. Thus, the azimuth at which the target M exists cannot be specified, either.

In the meantime, the first exemplary embodiment employs a time reversal method, and re-transmits the waveform of the time reversal reflected signal (e.g., FIG. 15C) that is acquired by reversing the reflected wave (waveform of FIG. 15B) of the first transmission signal. Thereby, it is possible to acquire a discriminable reflected signal (e.g. a waveform conforming to FIG. 15D) that is different from the reflected signal from the target M which cannot be discriminated with the reflected wave of the first transmission signal.

In this case, the time reversal reflected signal (e.g., the waveform of FIG. 15C) as a re-transmission signal among a waveform sequence is generated in a state where the peak position of the reflected signal from the target M cannot be specified. Thus, the transmission timing of the discriminable reflected signal from the target M acquired by the time reversal method cannot be specified. Therefore, the reciprocating time to the target M cannot be calculated, and the distance to the target M cannot be calculated.

However, when the discriminable reflected signal from the target M can be acquired by performing re-transmission with the time reversal method, the azimuth at the time of transmitting the time reversal reflected signal as the re-transmission signal is the azimuth at which the target M exists.

Thus, when the reflected peak value of the target M is confirmed as shown in FIG. 15D even with the reflected reception signal of the content shown in FIG. 15B of a case with a low S/N ratio, the azimuth information of the target M can be specified as the azimuth of the target M since the azimuth thereof is set at first.

The first exemplary embodiment utilizes that, and it is characterized to specify the azimuth information of the target M by effectively processing the reflected signals from the target M acquired under an environment with a low S/N ratio by the time reversal method in the manner described above and to detect the existing position of the target M at the unknown distance based thereupon by using a plurality of transmitters/receivers while the distance is being unknown.

(Explanation of Theoretical Contents and Extraction of Position of Target M)

Next, by referring to FIG. 3B, described is a case of detecting the position of the target M existing at an unspecified distance by using two transmitters/receivers.

FIG. 3B shows an X-Y coordinate system where the target M exists. In FIG. 3B, it is assumed that the transmitter/receiver 1 is placed at the origin on the X-Y coordinate system, and the transmitter/receiver 2 is placed at the coordinate position $(x_2, y_2)$ on the segment S tilted by $\theta$ degree from the X-axis. $L_0$ shows the distance between the transmitters/receivers 1 and 2.

Regarding the transmitter/receiver 1, shown is a case where the detection signal is transmitted counterclockwise of FIG. 3B in order of $\alpha_1$, $\alpha_2$, $\alpha_3$, --- from the segment S. Further, regarding the transmitter/receiver 2, shown is a case where the detection signal is transmitted clockwise of FIG. 3B in order of $\beta_1$, $\beta_2$, $\beta_3$, --- from the segment S.

Further, in the case of FIG. 3B, the transmitter/receiver 1 can acquire the reflected wave from the target M at the position of azimuth angle $\alpha_2$, and the transmitter/receiver 2 can acquire the reflected wave from the target M at the position of azimuth angle $\beta_2$. In the meantime, in the case of FIG. 3B, a clear reflected wave peak cannot be acquired in a case where each of the reflected waves is a waveform sequence as in FIG. 15B under a bad measurement environment with a low S/N ration of the reflected waves.

In this case, the transmitters/receivers 1, 2 generate and re-transmit the time reversal waves of the respective reflected waves to acquire the reflected waves thereof by the time reversal method of the case of FIG. 3A described above, so that the reflected time reversal signals as shown in FIG. 15D can be acquired even though the distance is unknown. Thereby, a peak value as the reflected wave from the target M can be acquired. The time reversal method may be employed to all the reflected waves acquired by transmissions at the azimuth angles $\alpha_1$, $\alpha_2$, $\alpha_3$ of the transmitter/receiver 1 and at the azimuth angles $\beta_1$, $\beta_2$, $\beta_3$ of the transmitter/receiver 2.

When the position calculating module 12 of the main control device 10 performs superimposing processing on the waveform sequence information of the reflected signal acquired first in each of the transmitters/receivers 1, 2 in the azimuth acquired in the manner described above at which the target M exists (azimuth angle $\alpha_2$ of the transmitter/receiver 1, azimuth angle $\beta_2$ of the transmitter/receiver 2), it is possible to acquire a peak value with an amplified intensity that is acquired by superimposing small peak values in a crossing area of the both waveform sequence information. Thus, the discriminable property with respect to the surrounding noise can be improved. Therefore, when it is displayed as an image, the existing position of the target M at that time can be clearly displayed to the outside.

In the first exemplary embodiment, the case of generating the re-transmission signal and re-transmitting it to acquire clear reflection information from the target M by the time reversal method has been described. However, in many cases, employed is a method which detects the peak position on a coordinate by performing superimposing processing on all the reflection information regarding the reflected signals acquired by the first transmission signal on the basis of the positional information of each of the transmitters/receivers 1, 2 without using the time reversal method.

However, with the above-described method, it is not possible to specify the reflected signals under a bad environment (low S/N ratio) as described above. Therefore, even the azimuth of the target M cannot be specified.

(Extraction of Azimuth Information by Two Transmitters/Receivers)

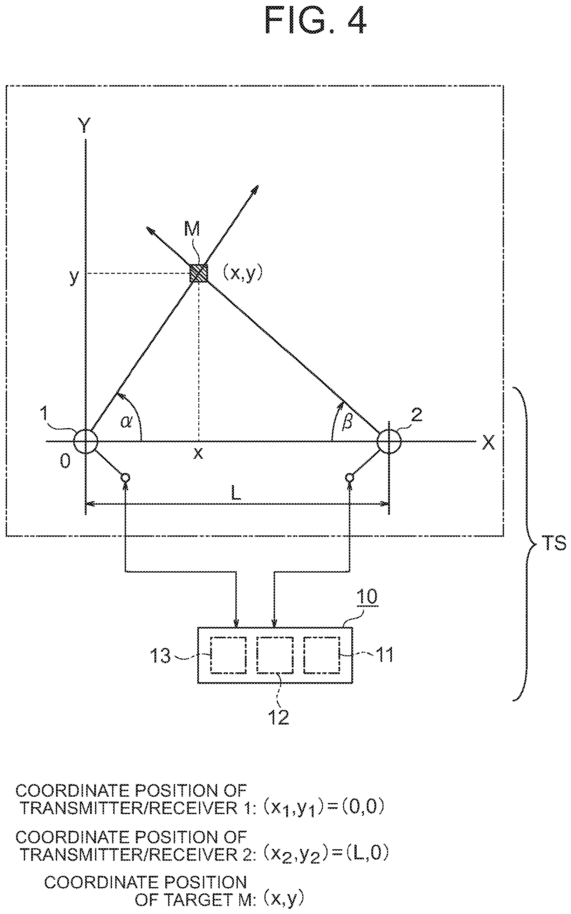

This will be described by referring to FIG. 1 and FIG. 4.

First, in FIG. 4, the target detection system TS according to the first exemplary embodiment includes: at least two target-detecting transmitters/receivers 1, 2 capable of setting the azimuth of the detection direction of the target M, which are disposed respectively at different placing positions; and the main control device 10 including the position calculating module 12 which specifies the position of the target M based on the reflection information regarding the azimuth of the target M proved by each of the transmitters/receivers 1,2.

Further, the position calculating module 12 is provided with a function (a target position estimating function) which specifies the position of the target M by performing superimposing processing of the information regarding the azimuth of the target M acquired by the two transmitters/receivers 1, 2 on the basis of the positional information of each of the transmitters/receivers 1, 2 (execution of azimuth information superimposing processing).

FIG. 4 is an explanatory chart showing the basic contents of that case.

In FIG. 4, an X-Y coordinate system is used as the position coordinate of each of the two transmitters/receivers 1 and 2.

For the sake of explanations, the coordinate position $(X_1, Y_1)$ of the transmitter/receiver 1 is set at the origin O (0, 0), the coordinate position $(X_2, Y_2)$ of the transmitter/receiver 2 is set at the coordinate (L, 0) on the X-axis, and the distance between the transmitter/receiver 1 and the transmitter/receiver 2 is set as L. In many cases, the detection area of the target M is assumed in advance, so that the first quadrant of the X-Y coordinate is also assumed as the detection area in this case.

As a detection method of the target M in the case of the transmitter/receiver 1, for example, a depression angle (incidence angle towards the Z-axis direction (not shown: direction orthogonal to the paper face) with respect to the X-Y plane) at the time of transmitting/receiving signals is set to a prescribed value. Thereafter, the azimuth angle (horizontal angle) $\alpha$ is set while sequentially being switched on the X-Y plane (by each of a plurality of azimuths sectioned in advance) counterclockwise from the X-axis side towards the Y-axis side with respect to the origin O. During that time, the transmitting/receiving module 1a (see FIG. 1) of the transmitter/receiver 1 transmits/receives the detection signal.

It is assumed to use sonars in the case of FIG. 4. In this regards, the setting range of the depression angle does not necessarily have to be strict considering the directivity of the ultrasonic waves (e.g., about three directions of the upper, middle, lower directions: the exemplary embodiment can correspond to all directions).

For transmission and reception of the detection signal in this case, the method of time reversal shown in FIG. 15 is employed to transmit/receive the first transmission/reception signal (see FIG. 15A) by each section for all the azimuths of the first quadrant and the reception data (see FIG. 15B) acquired as a result is stored in the transmitting/receiving module 1a and transmitted to the position calculating module 12 of the main control device 10 via the signal integrating module 1c (see FIG. 1). In this case, as is evident from FIG. 15B, it is impossible to clearly discriminate the peak from the noise because of the low S/N ratio, even though there is observed a peak of a signal seemed to be of the reflected wave from the target M. Thus, it cannot be surely confirmed as the reflected wave from the target M.

Then, the transmitting/receiving module 1a of the transmitter/receiver 1 stores the received/stored first reception data (reception signal containing the peak signal seemed to be of the reflected wave) to the signal reversing module 1b for generating a time reversal signal, gives an instruction to the signal reversing module 1b to generate a time reversal transmission signal for re-transmission based on the instruction from the timing control module (signal output control module) 13 or continuously to the receiving action of the first transmission/reception signal, and re-transmits the time reversal transmission signal (see FIG. 15C) generated thereby towards the detection area of the target M.

FIG. 15D shows a reflected time reversal signal of a case where the re-transmitted time reversal transmission signal is reflected from the target detection area. With the reflected time reversal signal shown in FIG. 15D, a relatively clear peak signal that is not observed in FIG. 15B is captured. This captured peak signal becomes the azimuth confirmation data for the same azimuth angle (horizontal angle) $\alpha$ (see FIG. 4).

Then, the captured reflected time reversal signal of FIG. 15C is stored as the azimuth confirmed data of the same azimuth angle (horizontal angle) $\alpha$ to the signal integrating module 1c along with the reception data from the corresponding first target detection area, and transmitted to the position calculating module 12 along with the coordinate information (0, 0) of the transmitter/receiver 1.

Then, in a case of the transmitter/receiver 2 placed on the coordinate position (L, 0) on the X-axis in FIG. 4, detection of the target M is also executed in the same manner as the case of the transmitter/receiver 1.

In this case, as in the case of the transmitter/receiver 1, a depression angle (incidence angle towards the Z-axis direction (not shown: direction orthogonal to the paper face) with respect to the X-Y plane) at the time of transmitting/receiving signals is set to a prescribed value. Thereafter, regarding the setting of the azimuth angle (horizontal angle) $\beta$ and change of the set angles, the rotating axis line is switched sequentially while being rotated on the X-Y plane (by each of a plurality of azimuths sectioned in advance) clockwise from the X-axis side towards the Y-axis side with respect to the coordinate position (L, 0). During that time, the transmitting/receiving module 2a transmits/receives the detection signal.

For transmission and reception of the detection signal in this case, the method of time reversal shown in FIG. 15 is employed to transmit receive the first transmission signal (see FIG. 15A) by each section for all the azimuths of the first quadrant on the X-Y plane and the reception data (see FIG. 15B) acquired as a result is stored in the transmitting/receiving module 2a and transmitted to the position calculating module 12 of the main control device 10 via the signal integrating module 2c. In this case, as in the case of the transmitter/receiver 1 (as evident from FIG. 15B), it cannot be surely confirmed as the reflected wave from the target M even though there is observed a peak of a signal seemed to be of the reflected wave from the target M.

Then, the transmitting/receiving module 2a of the transmitter/receiver 2 stores the received/stored first reception data (reception signal containing the peak signal seemed to be of the reflected wave) to the signal reversing module 2b for generating a time reversal signal, gives an instruction to the signal reversing module 2b to generate a time reversal transmission signal for re-transmission based on the instruction from the timing control module (signal output control module) 13 or continuously to the receiving action of the first transmission/reception signal, and re-transmits the time reversal transmission signal (see FIG. 15C, for example) generated thereby towards the detection area of the target M.

Regarding the reflected time reversal signal of the case where the re-transmitted time reversal transmission signal is reflected from the target detection area, a reflected signal almost equivalent to that shown in FIG. 15D can be acquired. In the case of the reflected time reversal signal shown in FIG. 15D, a relatively clear peak signal that is not observed in FIG. 15C is captured. This captured peak signal becomes the azimuth confirmation data for the same azimuth angle (horizontal angle) β (see FIG. 4).

Then, the captured reflected time reversal signal of FIG. 15D is stored as the azimuth confirmed data of the same azimuth angle (horizontal angle) β to the signal integrating module 2c along with the reception data from the corresponding first target detection area, and transmitted to the position calculating module 12.

That is, the transmitters/receivers 1 and 2 have: a time reversal signal transmitting/receiving function which performs time reversal on the reflected signals from the target detection area (first quadrant) by each of the transmitters/receivers 1, 2 by the time reversal method, and transmits time reversal signals of the reflected signals towards the target detection area as the target detection signals from the respective directions at the same azimuth angle same as the case of the prior reflected signal; and an azimuth confirmation information extracting function which confirms that the azimuth of the case where the reflected signal of the transmitted time reversal signal from the target M is acquired as the azimuth at which the target M exists. FIG. 4 shows an example of the specific exemplary embodiment of the two functions.

(Estimation of Position of Target M; Case of Two Transmitters/Receivers)

Then, the position calculating module 12 of the main control device 10 performs superimposing processing on the azimuth information transmitted from the transmitters/receivers 1, 2 under the setting condition shown in FIG. 4 in the manner described above based on the positional information (coordinate information) of the transmitters/receivers 1, 2 (execution of the azimuth information superimposing processing function).

Further, the point where the reflection intensity is high within the crossing area of each azimuth specified thereby is estimated as the position of the target. The estimated coordinate position of the target M is calculated by performing a prescribed arithmetic operation (the sine theorem of trigonometry, etc.) based on the coordinate positional information (0, 0) (L, 0) of the transmitters/receivers 1, 2 and the azimuth angles α, β, and the position of the target M within the crossing area is calculated (execution of the target position estimating function).

In this case, following expressions are acquired as expressions showing the position (x, y) of the target M on the X-Y coordinate of FIG. 4.

$$x = [(\sin \beta \cdot \cos \alpha)/(\sin \alpha \cdot \cos \beta + \sin \beta \cdot \cos \alpha)] \cdot L$$

$$y = [(\sin \alpha \cdot \sin \beta)/(\sin \alpha \cdot \sin \beta - \cos \alpha \cdot \cos \beta)] \cdot L$$

Regarding the position (x, y) of the target M acquired by the transmitters/receivers 1, 2, it is possible to calculate the position (x, y) of the target M in a substantially equivalent manner with the expressions described above even when the transmitters are arranged at other coordinate positions.

(Estimation of Position of Target M; Case of Three Transmitters/Receivers)

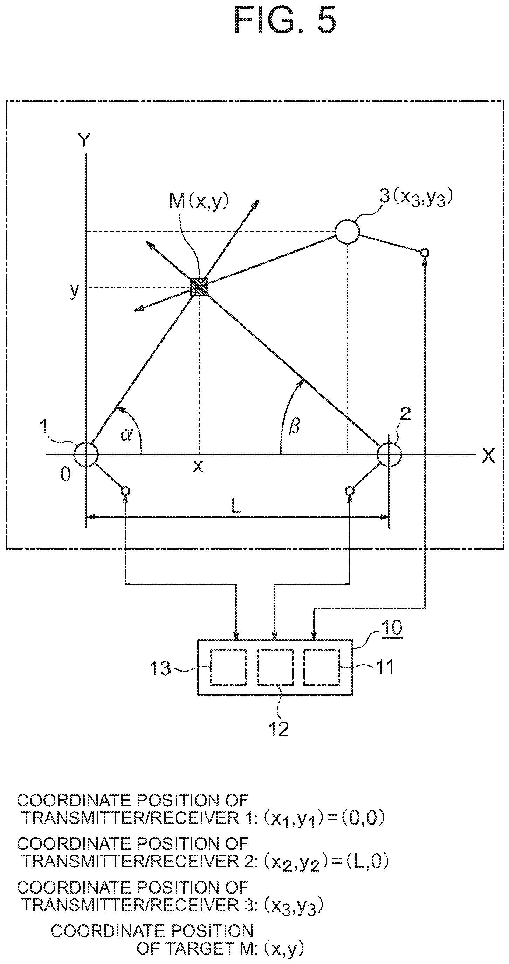

Next, an example of a case of estimating the position of the target M by placing three transmitters/receivers in the case of FIG. 4 will be described by referring to FIG. 5.

Specifically, as shown in FIG. 5, the third transmitter/receiver 3 is placed at the coordinate position $(x_3, y_3)$ in the 45-degree direction of the first quadrant of the coordinate axes on the X-Y plane disclosed in FIG. 4. As the third transmitter/receiver 3, used in the first exemplary embodiment is a transmitter/receiver having the same functions as those of the transmitters/receivers 1. 2 described above. Further, for extracting the azimuth of the target M, each of the transmitters/receivers 1 to 3 uses the time reversal method that is the same as the case of FIG. 4 described above. Thus, each of the transmitters/receivers 1 to 3 can specify the azimuth of the target M with high accuracy.

Other structures are the same as the contents illustrated in FIG. 4 that is described above.

When superimposing processing is performed on the waveform information regarding the reflected signals from the target M (by the position calculating module 12 of the main control device 10 described above) in a case where the three transmitters/receivers 1, 2, and 3 are placed, the reflected reception signals of each of the transmitters/receivers 1 to 3 are superimposed at the position on the coordinate corresponding to the target M without being shifted from each other. Thus, even when the signals received at each of the transmitters/receivers 1 to 3 are of a small S/N ratio, the peak value can be easily recognized compared to the signals of the surrounding noise. Therefore, it is excellent in terms of practicality.

Further, when the three peak values of the reflected reception signals of each of the transmitters/receivers 1 to 3 are shifted from each other at the positions on the coordinate corresponding to the target M, it becomes evident by the superimposing processing that the reflection propagation paths of the signals captured at least by the two transmitters/receivers out of each of the transmitters/receivers 1 to 3 are not normal. In this regards, it is possible to immediately set to the normal state by changing the layout positions of each of the transmitters/receivers 1 to 3, or by switching each of the transmitters/receivers 1 to 3 with other transmitters/receivers, for example. Therefore, it is highly useful.

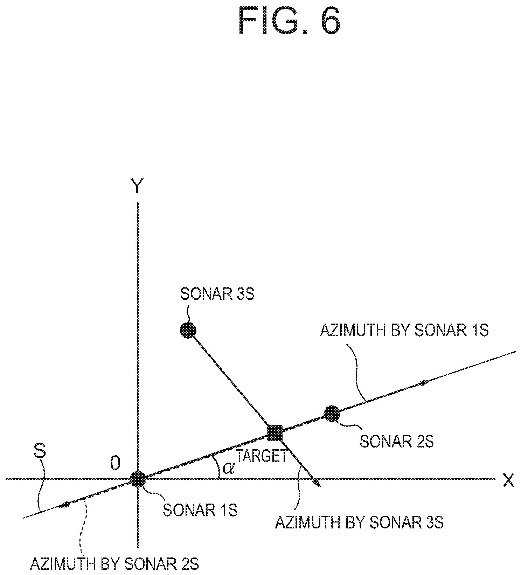

Next, FIG. 6 shows another example of a case where three sonars are placed in the same area of the sea to detect the target M.

In the case of FIG. 6, sonars 1S and 2S as the transmitters/receivers are loaded on a segment S at a tilt angle $\alpha$ passing through the origin of the X-Y coordinate system, and it is a case where the target M comes on the straight line that connects each of the sonars S1 and S2 mutually.

Each of the sonars 1S and 2S can extract the azimuth at which the target M exists. However, even when the superimposing processing of the reception signals is executed, the distance is unknown as described above under a bad environment. Thus, it is not possible to estimate the existing position of the target M.

In this case, when the detection signal transmitted from a sonar 3S as the third transmitter/receiver is placed at the direction crossing with the segment S described above as shown in FIG. 6, the sonar 3S can clearly extract the azimuth of the target M by the time reversal method. Thus, through performing superimposing processing on the azimuth of the reflected reception signal from the target M received by the sonar 3S along with the waveform information of the corresponding reflected reception signals on the segment S showing the azimuths of the sonars 1S and 2S described above, the existing position of the target M can be captured clearly.

(Case of Target M Located in Three-dimensional Space; Dealt with Two Transmitters/Receivers)

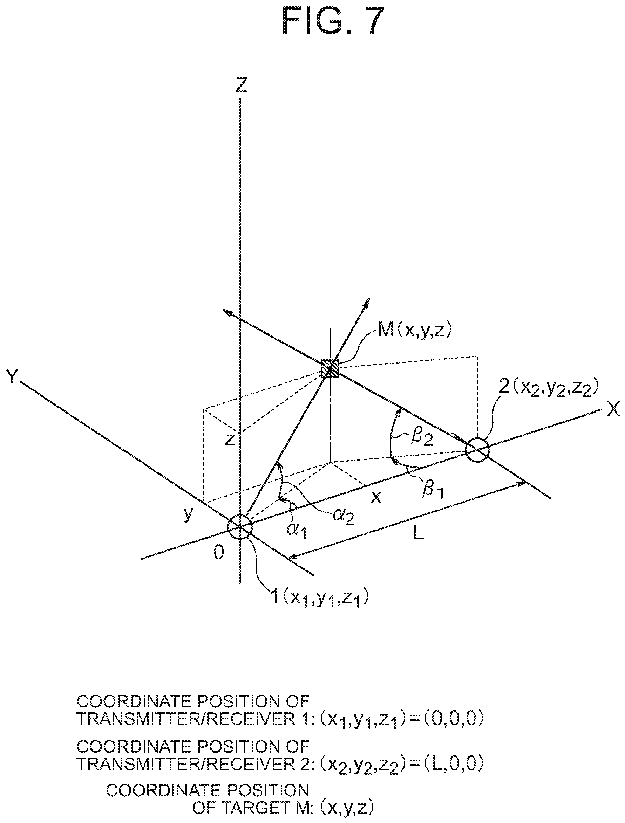

Next, a case of estimating the space position of the target M located under a bad environment of a three-dimensional space by using two transmitters/receivers will be described. FIG. 7 shows an example of this case.

The example shown in FIG. 7 illustrates a case where the transmitters/receivers 1, 2 are placed with a distance L provided therebetween on the X-axis of the X-Y-Z coordinate system as in the case of FIG. 4 and the target M is located on the upper side of the X-Y plane in FIG. 4. The coordinate position of the target M is defined as (x, y, z). Further, it is so defined that the depression angle (incidence angle) of the transmitter/receiver 1 when detecting the target M is $\alpha_2$, and the azimuth when switching the facing direction of the horizontal direction is $\alpha_1$. It is also so defined that the depression angle (incidence angle) of the other transmitter/receiver 2 when detecting the target M is $\beta_2$, and the azimuth when switching the facing direction of the horizontal direction is $\beta_1$.

In the case of FIG. 7, first, the depression angles (incidence angles) $\alpha_2$, $\beta_2$ of the transmitters/receivers 1, 2 are set to appropriate values. Then, the azimuths (incidence angles) $\alpha_1$, $\beta_1$ of the transmitters/receivers 1, 2 are rotated by each of the azimuth degrees sectioned in the direction away from the X-axis (e.g., by every 5 degrees) simultaneously or respectively in a sequential manner, and the target M is detected by transmitting/receiving a detection signal towards the upward oblique direction for each time.

In a case where each of the azimuths (incidence angles) $\alpha_1$, $\beta_1$ becomes 90 degrees, the depression angles (incidence angles) $\alpha_2$, $\beta_2$ are then set to other degrees. Thereafter, the azimuths (incidence angles) $\alpha_1$, $\beta_1$ of the transmitters/receivers 1, 2 are both rotated by each of the azimuth degrees sectioned in the opposite directions of the earlier directions simultaneously or respectively in a sequential manner, and the target M is detected by transmitting/receiving a detection signal towards the upward oblique direction for each time.

Then, the reflected signals received at each of the transmitters/receivers 1, 2 are stored by each of the transmitters/receivers 1, 2 as reception signals, and time reversal signals of the reception signals are generated simultaneously by the time reversal method to be re-transmitted towards the detection area of the target M to confirm the existence of the target M in the same manner as the case of FIG. 4.

Thereinafter, this operation is repeatedly executed. Then, when the existence of the target M is confirmed, the depression angles (incidence angles) $\alpha_2$, $\beta_2$ and the azimuth angles (incidence angles) $\alpha_1$, $\beta_1$ are checked by each of the transmitters/receivers 1, 2, and the waveform information of the reflected reception signals acquired at the time of setting the depression angles (incidence angles) $\alpha_2$, $\beta_2$ and the azimuth angles (incidence angles) $\alpha_1$, $\beta_1$ is transmitted to the position calculating module 12 of the main control device 10 along with the angle information for each of the transmitters/receivers 1, 2.

As in the case of FIG. 4 described above, the position calculating module 12 performs superimposing processing on the transmitted angle information of the target M and the waveform information of the reception signals on all the areas where the azimuth angles (incidence angles) $\alpha_1$, $\beta_1$ change for each of the depression angles (incidence angles) $\alpha_2$, $\beta_2$. Thereby, the existing position of the target M, i.e., the three-dimensional coordinate position (x, y, z), is specified in the same manner as the case of FIG. 4.

In this case, regarding each of the transmitted waveform information of the reception signals in the first exemplary embodiment, the reflection intensity containing the noise thereof may be projection-processed on a plane of the X-Y coordinate in accordance with the azimuth angles $\alpha_1$, $\beta_1$ and projection-processed on a plane of the X-Y coordinate in accordance with the depression angles (incidence angles) $\alpha_2$, $\beta_2$. Thereafter, the superimposing processing may be performed to specify the current position of the target M, i.e., the three-dimensional coordinate position (x, y, z).

(Case of Target M Located in Three-dimensional Space: Dealt with Three Transmitters/Receivers)

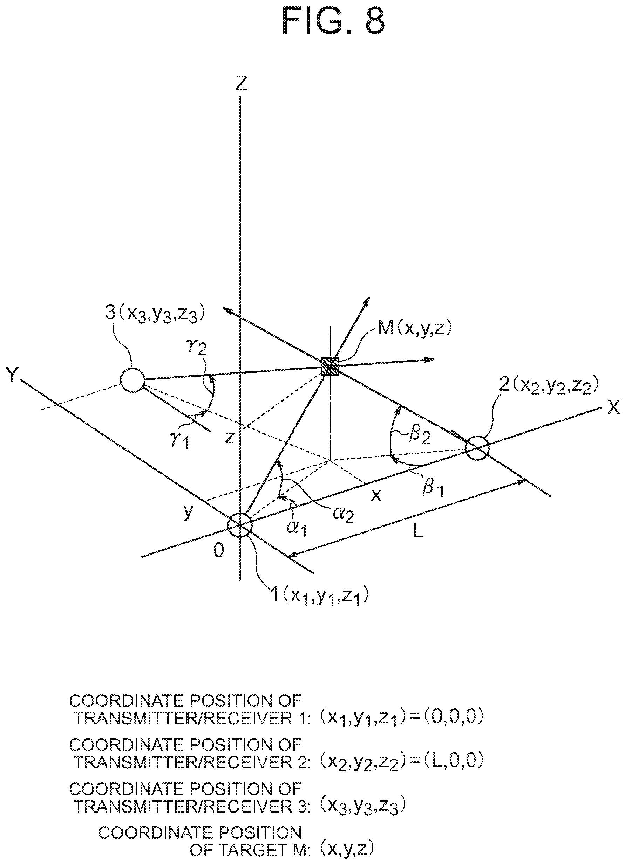

Next, a case of estimating the space position of the target M located by using three transmitters/receivers in the case of FIG. 7 will be described by referring to FIG. 8.

Specifically, as shown in FIG. 8, the third transmitter/receiver 3 is placed at a coordinate position $(x_3, y_3, z_3)$ close to the Y-axis in the first quadrant of the coordinate axes on the X-Y plane disclosed in FIG. 7.

Note here that FIG. 8 illustrates a case of placing all the transmitters/receivers 1, 2, and 3 on the X-Y plane (z = 0).

Further, as the third transmitter/receiver 3, used in the first exemplary embodiment is a transmitter/receiver having the same functions as those of the transmitters/receivers 1, 2 described above. Further, for extracting the azimuth of the target M, each of the transmitters/receivers 1 to 3 uses the time reversal method that is the same as the case of FIG. 4 described above. Thus, each of all the transmitters/receivers 1 to 3 can specify the azimuth of the target M with high accuracy.

Other structures are the same as the contents illustrated in FIG. 7 described above.

When superimposing processing is performed on the waveform information regarding the reflected signals from the target M by the position calculating module 12 of the main control device 10 described above in a case where the three transmitters/receivers 1, 2, and 3 are placed, the reflected reception signals of each of the transmitters/receivers 1 to 3 are superimposed at the position on the coordinate corresponding to the target M without being shifted from each other. Thus, even when the signals received at each of the transmitters/receivers 1 to 3 are of a low S/N ratio, the peak value can be easily recognized compared to the signals of the surrounding noise. Therefore, it is excellent in terms of practicality.

Further, when the three peak values of the reflected reception signals of each of the transmitters/receivers 1 to 3 are shifted from each other at the positions on the coordinate corresponding to the target M, it becomes evident by the superimposing processing that the reflection propagation paths of the signals captured at least by the two transmitters/receivers out of each of the transmitters/receivers 1 to 3 are not normal. In this regards, it is possible to immediately set to the normal state by changing the layout positions of each of the transmitters/receivers 1 to 3, or by switching each of the transmitters/receivers 1 to 3 with other transmitters/receivers, for example. Therefore, it is highly useful.

While the case of placing the three transmitters/receivers 1, 2, 3 are placed on the X-Y plane is illustrated in FIG. 8 for the sake of explanations, it is also possible to employ a structure where those transmitters/receivers are placed on other three-dimensional spaces, respectively.

(Structure/Function of Main Control Device)

As described above, the main control device 10 includes the transmitter/receiver layout device 11, the position calculating module 12, and the timing control module (output waveform control module) 13.

Among those, the position control module 12 is structured to receive the waveform intensity from the signal integrating module 1c of the transmitter/receiver 1 and add (superimpose) it with the waveform intensities from the other transmitters/receivers 2, 3, ---, N on the same coordinate for each coordinate, and also structured to transmit the coordinate information as a coordinate candidate to the timing control module (output waveform module) 13 and the external display device 30 as well as the storage device 40 by considering that it is highly possible that the target M exists at that coordinate at which the waveform intensity becomes greater than the threshold value that is given by the waveform intensity given in advance.

Further, the timing control module (signal output control module) 13 has a function which calculates the optimum transmission timing of the transmission waveform information of the transmitter/receiver 1 as the transmission timing from each piece of information regarding the position of the transmitter/receiver 1 acquired from the transmitter/receiver layout module 11, the candidate coordinate acquired from the position calculating module 12, the detection range given in advance or the detection range designated from outside successively, and the previous transmission time

Further, the timing control module (signal output control module) 13 has a function which calculates the optimum timing for reversing the waveform as the reversal timing from each piece of information regarding the position of the transmitter/receiver 1 acquired from the transmitter/receiver layout module 11, the candidate coordinate acquired from the position calculating module 12, the detection range given in advance or the detection range designated by the external designating device 20 successively, and the previous transmission time. Further, the timing control module 13 has a function which informs the transmission timing and the reversal timing to the transmitting/receiving module 1a of the transmitter/receiver 1.

Note here that each of the other transmitters/receivers 2 to N are structured by including transmitting/receiving modules 2a, 3a, ---, Na, signal reversing modules 2b, 3b, ---, Nb, signal integrating modules 2c, 3c, ---, Nc, and position/attitude control modules 2d, 3d, ---, Nd as in the case of the transmitter/receiver 1 as shown in FIG. 1. Each of those other transmitters/receivers 2 to N is structured to be able to transmit/receive signals to the signal transmitter/receiver layout module 11, the position calculating module 12, and the timing control module 13 of the main control device 10 as in the case of the transmitter/receiver 1.

For those other transmitters/receivers 2 to N, the transmitter/receiver layout module 11 of the main control device 10 also has a function which acquires positional information and attitude information of each of the transmitters/receivers 2 to N from the position/attitude control modules 2d, 3d, ---, Nd of each of the transmitters/receivers 2 to N, and informs the positional information as well as the attitude information designated in advance regarding each of the transmitters/receivers 2 to N or information regarding the position and attitude of each of the transmitters/receivers 2 to N designated from the external instruction device 20 to the respective corresponding position/attitude control modules 2d, 3d, ---, Nd.

Further, as in the case of the position/attitude control module 1d, the other position/attitude control modules 2d, 3d, ---, Nd of each of the transmitters/receivers 2 to N have functions which acquire each attitude information of corresponding each of the transmitters/receivers 2 to N, store each information regarding the positions and attitudes of the transmitters/receivers 2 to N, transmit those to the transmitter/receiver layout module 11, and move main body moving power devices $2d_{02}$, $3d_{02}$, $Nd_{02}$ provided to the position/attitude control modules 2d, 3d, ---, Nd to individually control to move each of the transmitters/receivers 2 to N.

The position control module 12 of the main control device 10 is structured to receive the waveform intensity from the signal integrating modules 2c, 3c, ---, Nc of each of the transmitters/receivers 2, 3, ---, N and add (superimpose) the waveform intensities for each coordinate, and also structured to transmit the coordinate information as a coordinate candidate to the timing control module (output waveform module) 13 and the external display device 30 as well as the storage device 40 indicating that it is highly possible that the target M exists at that coordinate which becomes greater than the threshold value that is given by the waveform intensity given in advance.

The timing control module (signal output control module) 13 has a function which calculates the optimum transmission timing of the transmission waveform information of the transmitter/receivers 2 to N as the transmission timing from each piece of information regarding the position of the transmitter/receiver 1 acquired from the transmitter/receiver layout module 11, the candidate coordinate acquired from the position calculating module 12, the detection range given in advance or the detection range designated from outside successively.

Similarly, the timing control module (signal output control module) 13 has a function which calculates the optimum timing for reversing the waveform as the reversal timing from the positional information of each of the transmitters/receivers 2 to N acquired from the transmitter/receiver layout module 11, the candidate coordinate information acquired from the position calculating module 12, the information regarding the detection range given in advance or the detection range designated by the external designating device 20 successively, and the previous transmission time information.

Further, the timing control module 13 is structured to inform the transmission timing and the reversal timing to the transmitting/receiving modules 2a, 3a, ---, Na of each the transmitters/receivers 2 to N.

The position calculating module 12, the signal reversing module 1b, and the signal integrating module 1c are structured with various kinds of devices capable of performing digital signal processing. Each of these modules 12, 1b, and 1c may be a board computer constituted with DSP, mass-storage subsidiary memory device, a mass-storage memory, or the like or may be a typical personal computer or a work station.

The transmitter/receiver layout module 11 and the timing control module 13 may be formed by having the computers described above as the base. Note here that the transmitter/receiver layout module 11 includes a wired or radio communication device (communication module) for giving an instruction to move each of the transmitters/receivers 1, 2, 3, ---, N. Further, the timing control module 13 also includes a wired or radio communication device (communication module) for giving an instruction regarding the timing of transmission and signal reversal to each of the transmitters/receivers 1 to N.

Further, the external instruction device 20, display device 30, and storage device 40 may be structured to include different computers from each other as the operation control modules. Alternatively, each of those devices 20, 30, and 40 as a whole may be integrated and controlled to be operated by a single computer. Further, the external instruction device 20, display device 30, storage device 40 and the target detection system S corresponding thereto are structured to be able to exchange data mutually via the wired or radio communication module.

As the communication module used in each of the modules and devices, it is possible to use such type using radio waves, sonic waves, light, infrared rays, or the like.

(Overall Operations)

Next, the overall operations of the first exemplary embodiment will be described.

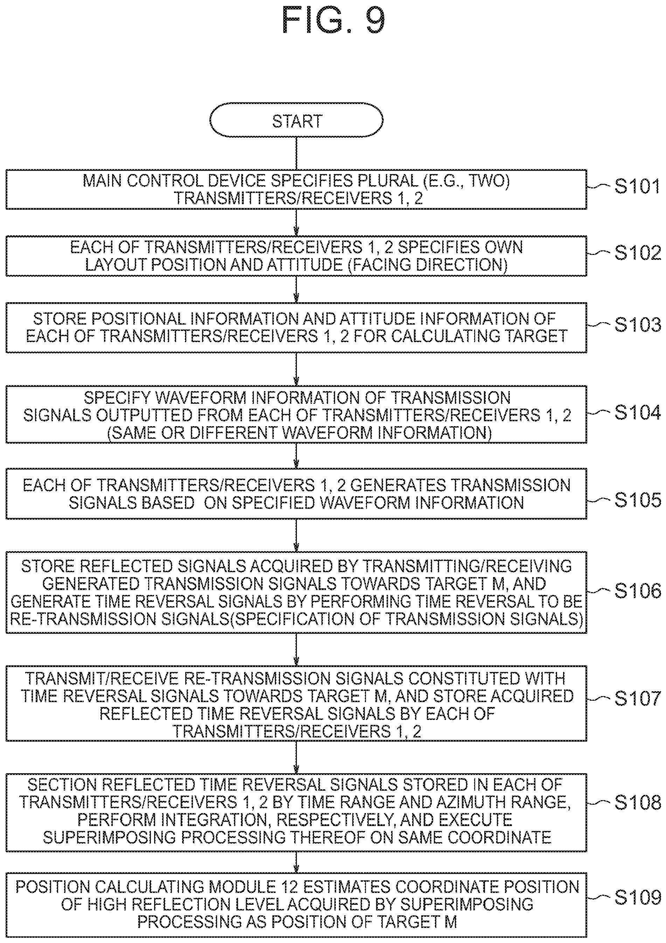

Basic operations will first be described by referring to a flowchart of FIG. 9, and specific operation contents will be described in details thereafter.

First, the transmitter/receiver layout module 11 of the main control device 10 specifies at least two transmitters/receivers 1, 2 from a plurality of transmitters/receivers 1 to N provided for detecting a target, and gives an instruction to each of the transmitters/receivers 1, 2 to set the positions and attitudes thereof towards the target detection direction (FIG. 9: step S101).

Then, according to the instruction from the transmitter/receiver layout module 11, each of the transmitters/receivers 1, 2 operates the main body moving power unit $1d_{02}$ provided in advance to set the positions and attitudes of each of the transmitters/receivers 1, 2 in accordance with the instruction contents, and transmits the information regarding the set positions and attitudes (transmitter/receiver information) to the main control device 10 thereafter (FIG. 9: step S102). When the transmitter/receiver information is transmitted from each of the transmitters/receivers 1, 2, the main control device 10 collects it as the transmitter/receiver information by the position calculating module 12 and stores it to the storage device 40 for calculating the target (FIG. 9: step S103).

After collecting the transmitter/receiver information by the position calculating module 12, the timing control module (output waveform control module) 13 of the main control device 10 gives an instruction to each of the transmitters/receivers 1, 2 to generate transmission signals based on either the different waveform information or the same waveform information, and sets the transmission timings of the generated signals at the same time (FIG. 9: step S104).

Then, each of the transmitters/receivers 1 and 2 specified according to the instruction of the timing control module (output waveform control module) 13 generates the transmission signals (FIG. 9: step S105).

Subsequently, reflection signals acquired by transmitting/receiving the generated transmission signals from the transmitters/receivers 1, 2 towards the target M are stored. At the same time, the signal reversing modules 1b, 2b also store those and, thereafter, when there is a request from the transmitting/receiving modules 1a, 2a, generate the respective time reversal signals and transmit those to the transmitting/receiving modules 1a, 2a as the transmission signals (FIG. 9: step S106, specification of transmission signal).

The transmitting/receiving modules 1a, 2a individually transmit/receive re-transmission signals constituted with the time reversal signals towards the target M, and store the acquired reflected time reversal signals to the corresponding transmitters/receivers 1, 2 as the signals for checking the azimuth (FIG. 9: step S107).

Each of the signal integrating modules 1c, 2c integrates the stored reflected time reversal signals of each of the transmitters/receivers 1, 2 by sectioning those by the time range and the azimuth range, and the position calculating module 12 fetches the integrated reflected time reversal signals and performs superimposing processing on a same coordinate (FIG. 9: step S108). The position calculating module 12 estimates and calculates the coordinate position of a high reflection level on the coordinate acquired by the superimposing processing as the position of the target M (FIG. 9: step S109).

(Operation Contents of Transmitters/Receivers 1, 2)

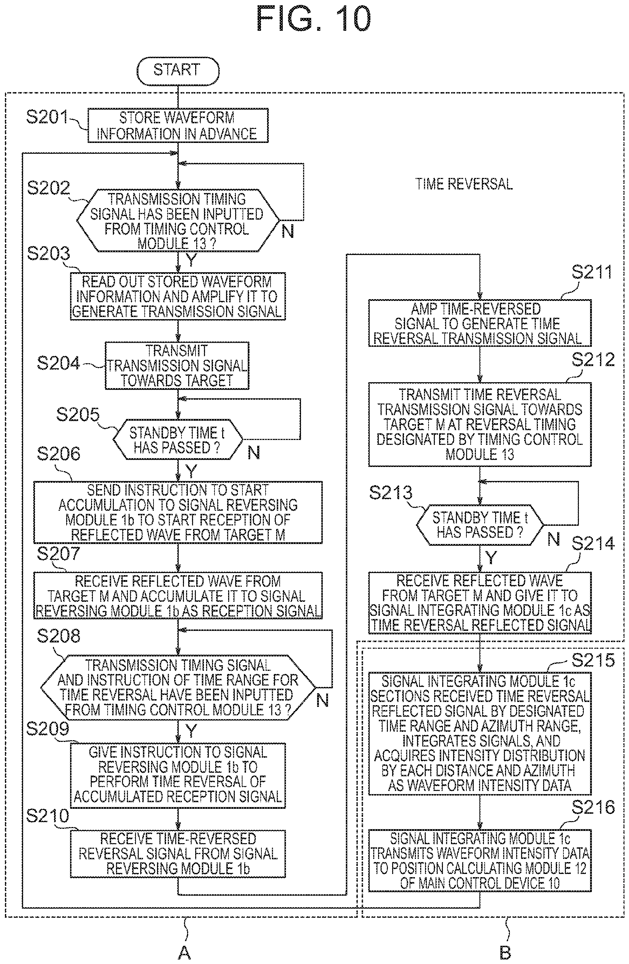

Subsequently, operation contents of the transmitters/receivers 1, 2 in particular out of the operation contents will be described in more details by referring to FIG. 10.

In FIG. 10, a dotted-line frame of A shows the operations of the transmitter/receiver 1a of the transmitter/receiver 1, and a dotted-line frame of B shows the operations of the signal integrating module 1c.

The transmitting/receiving module 1a stores in advance the waveform information regarding radio waves, sonic waves, light waves, or the like, which is time-series fluctuation of waves such as the wavelength, amplitude, phase, and modulation method of the waves to be transmitted (FIG. 10: step S201).

Then, the transmitting/receiving module 1a waits for an instruction of the optimum transmission timing for the transmitter/receiver 1 to transmit the transmission signal regarding the transmission waveform information from the timing control module (output waveform control module) 13 (FIG. 10: step S202).

Upon inputting the transmission timing designated from the timing control module (output waveform control module) 13, the transmitting/receiving module 1a of the transmitter/receiver 1 reads out the waveform information stored in advance in step S202, generates a transmission signal by performing amplification with an amplifying rate designated in advance by the transmitter/receiver 1 according to the waveform information, and transmits the transmission signal towards the target M (FIG. 10: steps S203, S204). This transmission signal is the same as the transmission waveform shown in FIG. 15A, for example.

After transmitting the transmission signal and time t given in advance has passed (FIG. 10: step S205) the transmitting/receiving module 1a gives an instruction to the signal reversing module 1b to accumulate the reception signals and starts reception of signals to receive the reflected waves of the transmission signals from the target M (FIG. 10: step S206) in order to avoid strong reflection from the media such as the air and water very close to the transmitting/receiving module 1a or from floating matters contained in the media.

In the meantime, upon receiving the instruction for starting the accumulation from the transmitting/receiving module 1a, the signal reversing module 1b accumulates the waveform information after the transmitting/receiving module 1a start the reception as the reception signals (FIG. 10: step S207). This reception signal is the same as the reception waveform information shown in FIG. 15B, for example.

Subsequently, the transmitting/receiving module 1a waits for an input of instruction information regarding the reversing timing and time range for time reversal from the timing control module 13 (FIG. 10: step S208). Then, when receiving the instruction information regarding the reversal timing, the transmitting/receiving module 1a gives an instruction to the signal reversing module 1b to perform time reversal within the time range designated by the timing control module 13 regarding the reception waveform information accumulated theretofore (FIG. 10: step S209).

In this case, the signal reversing module 1b performs time reversal on the signal within the time range designated by the transmitting/receiving module 1a at the timing designated by the transmitting/receiving module 1a, and gives the reversed signal to the transmitting/receiving module 1a for re-transmission. The transmitting/receiving module 1a receives the time-reversed re-transmission signal from the signal reversing module 1b (FIG. 10: step S210).

The transmitting/receiving module 1a generates a time reversal transmission signal (re-transmission signal) for transmission by amplifying the amplitude of the transmission signal reversed by the signal reversing module 1b at the reversal timing with the amplifying rate given in advance (FIG. 10: step S211). The transmitting/receiving module 1a transmits the time reversal transmission signal (re-transmission signal) towards the target M at the reversal timing designated by the timing control module 13 (FIG. 10: step S212). This time reversal transmission signal is the same as the time reversal waveform signal shown in FIG. 15C, for example.

As in step S205, after transmitting the time reversal transmission signal and time t given in advance has passed (FIG. 10: step S213), the transmitting/receiving module 1a receives a reflected signal for the time reversal transmission signal at the signal reversing module 1b from the target M and gives it to the signal accumulating module 1c as a time reversal reflected signal (FIG. 10: step S214) in order to avoid strong reflection from the media such as the air and water very close to the transmitting/receiving module 1a or from floating matters contained in the media. This time reversal transmission signal is the same as the reception waveform information shown in FIG. 15D, for example.

The signal integrating module 1c receives the time reversal reflected signals from the transmitting/receiving module 1a, integrates the signals by the time range and azimuth range designated in advance to acquire the intensity distribution of the time reversal reflected signals by each time and azimuth, i.e., by each distance and azimuth, as the waveform intensity information, and transmits those to the position calculating module 12 at the prescribed timing (FIG. 10: step S215).

Regarding the signal integrating module 1c, the S/N ratio of the reflection from the target M can be improved for each azimuth through expanding the time range to integrate the signals, i.e., through decreasing the distance resolution. Further, regarding the signal integrating module 1c, it is also possible to acquire the waveform information by shortening the time, i.e., by decreasing the distance resolution, and to separately integrate the signals in the distance direction for each azimuth.

Further, the signal integrating module 1c transmits the waveform intensity to the position calculating module 12 of the main control device 10 (FIG. 10: step S216).

The other transmitter/receiver 2 executes the same operations.

(Operations of Position/Attitude Control Module 1d)

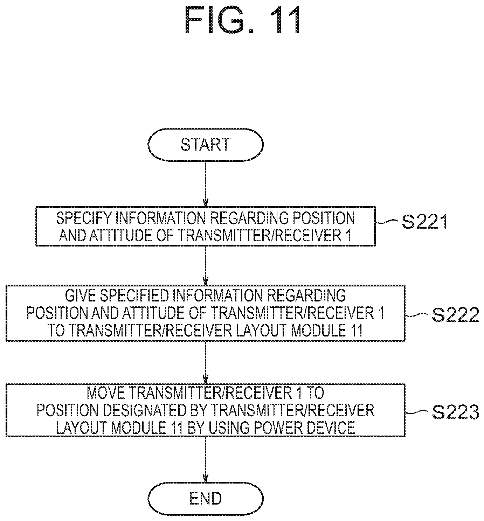

Next, operations of the position/attitude control module 1d of the transmitter/receiver 1 will be described by referring to FIG. 11.

The position/attitude control module 1d corresponds to step S102 of the basic operations shown in FIG. 9 described above.

First, in FIG. 11, the position/attitude control module 1d specifies the positional information of the transmitter/receiver 1 from GPS, matching with a topographic map or the like, or a record of actions taken theretofore, and specifies attitude information of the transmitter/receiver 1 from an attitude sensor or a record of actions taken theretofore (FIG. 11: step S221). Further, the position/attitude control module 1d gives the values of the position and attitude of the transmitter/receiver 11 to the transmitter/receiver layout module 11 (FIG. 11: step S222).

The position/attitude control module 1d moves the transmitter/receiver 1 to the position designated by the transmitter/receiver layout module 11 by a power device such as a screw, propeller, jet blower, rocket blower, or the like to complete the setting of the position and attitude of the transmitter/receiver 1 thereby (FIG. 11: step S223). The other transmitter/receiver 2 executes the same operations.

(Operations of Main Control Device)

Next, operations of the main control device 10 will be described.

In the main control device 10, the transmitter/receiver layout module 11 first acquires the information regarding the positions and attitudes of each of the transmitters/receivers 1, 2 from each of the position/attitude control modules 1d, 2d of the transmitters/receivers 1, 2 and, further, informs the setting information regarding the positions and attitudes designated in advance regarding each of the transmitters/receivers 1, 2 or setting information regarding the positions and attitudes of each of the transmitters/receivers 1, 2 designated by the external instruction device 20. This is the same when specifying another transmitter/receiver 3N.

Further, the position calculating module 12 of the main control device 10 receives information related to the waveform intensity from each of the signal integrating modules 1c, 2c of the transmitters/receivers 1, 2, and executes the superimposing processing of the waveform intensity on the same coordinate. Further, the position calculating module 12 takes a coordinate as a coordinate candidate by considering that it is highly possible that the target exists at that coordinate at which the waveform intensity becomes greater than the threshold value that is given in advance. The position calculating module 12 gives the acquired information of the candidate coordinate to the timing control module 13 and the external display device 30 as well as the storage device 40.

For example, when the waveform intensities received from each of the signal integrating modules 1c, 2c of the transmitters/receivers 1, 2 do not have the distance resolution, it is only the azimuth D of the target M that can be known from each of the transmitter/receiver 1, as shown in FIG. 3A.

As shown in FIG. 3B, in a case of two transmitters/receivers 1, 2, the waveform intensity at the point where the azimuths D1 and D2 cross with each other becomes great. Thus, the two transmitters/receivers 1 and 2 can detect the position of the target M.

Further, even in a case where each of the transmitters 1 to N has the distance resolution of some extent, it is also possible to estimate the position of the target M from the waveform intensities of each of a plurality of transmitters/receivers 1 to N in the same manner as the case of FIG. 3B.

In the meantime, the timing control module (signal output control module) 13 of the main control device 10 calculates the optimum transmission timings of the transmission signals for each of the transmitters/receivers 1, 2 from the positions of the transmitters/receivers 1, 2 acquired from the transmitter/receiver layout module 11, the candidate coordinates acquired from the position calculating module 12, the detection range given in advance or the detection range designated by the external designating device 20 successively. This is the same when specifying the other transmitters/receivers 3 to N.

The timing control module 13 transmits the calculated optimum transmission timings of the transmission signals for each of the transmitters/receivers 1 to N to the transmitting/receiving modules 1a, 2a, 3a, ---, Na of each of the transmitters/receivers 1 to N.

Regarding the optimum transmission timings of the transmission signals, the timing control module 13 may transmit the transmission signals simultaneously to all the transmitters/receivers 1 to N, for example, or may transmit the transmission signals after checking (knowing) that the detectable range by the transmission signals transmitted from the other transmitters/receivers 2, ---, N exceeds a prescribed detection range and the transmission signals transmitted from the other transmitters/receivers 2, ---, N do not become obstacles, for example.

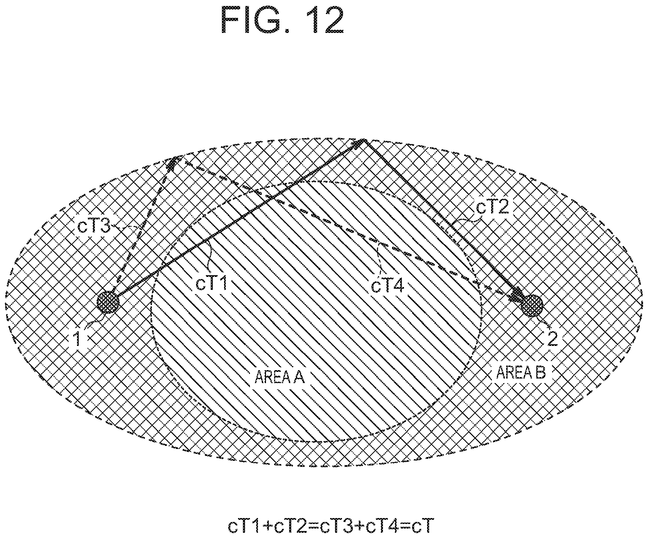

As shown in FIG. 12, for example, in a case where the area shown as A is the prescribed range and there are two transmitters/receivers 1, 2 in the area A, an oval area shown as B is to be swept by taking the signal propagation speed as c when the transmission waveform information transmitted from the transmitter/receiver 1 reaches the transmitter/receiver 2 after the time T has passed. The area B includes the area A.

In FIG. 12, $c \cdot T1$, $c \cdot T2$, $c \cdot T3$, and $c \cdot T4$ are in a relation of "$c \cdot T1 + c \cdot T2 = c \cdot T3 + c \cdot T4 = c \cdot T$".

Even when a transmission signal is transmitted anew from the transmitter/receiver 2 at this transmission timing and even if the transmission signal is the same as the waveform of the transmitter/receiver 1, the waveform of the transmitter/receiver1 is not confused with the waveform of the transmitter/receiver 2. That is, a next transmission can be done at a timing where the oval area is swept when the wave transmitted from the transmitter/receiver 1 reaches the transmitter/receiver 2 comes to be circumscribed to the prescribed area.

Further, other than that, it is also possible to set the timing to complete the sweep of the prescribed area in a prescribed time, for example.

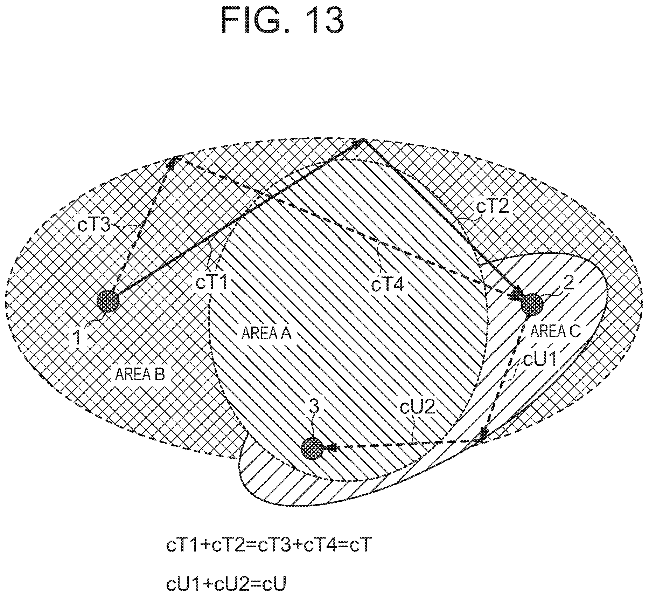

As shown in FIG. 13, for example, in a case where there are three transmitters/receivers 1, 2, 3 and the distances from each other are different, the oval area B covered by the transmitter/receiver 1 and the transmitter/receiver 2 is large while an oval area C covered by the transmitter/receiver 2 and the transmitter/receiver 3 is small.

In this case, in FIG. 13, $c \cdot T1$, $c \cdot T2$, $c \cdot T3$, and $c \cdot T4$ are in a relation of "$c \cdot T1 + c \cdot T2 = c \cdot T3 + c \cdot T4 = c \cdot T$". Further, $c \cdot U1$ and $c \cdot U2$ in FIG. 13 are in a relation of "$c \cdot U1 + c \cdot U2 = c \cdot U$", and $c \cdot U$ and $c \cdot T$ are in a relation of "$(c \cdot U) < (c \cdot T)$".

Thus, in order to complete the sweep simultaneously, it is necessary to delay the transmission timing of the transmitter/receiver 3. For example, the timing for starting the sweep of each oval can be acquired by finding the size of each oval of a case where the area that is the integration of the oval area swept by the transmitter/receiver 1 and the transmitter/receiver 2 and the oval area swept by the transmitter/receiver 3 comes to be circumscribed to the prescribed area and by calculating the time with which the oval becomes that size.

Regarding the sweep, it is necessary to pay attention that there are two transmissions of transmission waveform information and time reversal waveform information.

The target detection system disclosed in FIG. 13 is also applied to cases where there N-pieces (three or more) of transmitters/receivers. Each of the transmitters/receivers 1, 2, 3, ---, N can capture the azimuth of the target M by the time reversal method described above. Therefore, the signals are integrated by a unit of azimuth for each of the transmitters/receivers, so that it is persistent for the condition of a low S/N ratio than the case of calculating the signal intensity by each distance. Through integrating the reception results of each of the transmitters/receivers 1, 2, 3, ---, N, it becomes more persistent to the condition of a low S/N ratio.

In addition, the position of the target M can be estimated by superimposing the azimuths of the target M acquired by each of the transmitters/receivers 1, 2, 3, ---, N. That is, even when the reflection from the target M is weak under an environment where the multiple reflections are prominent, it becomes possible to check the azimuth by executing the time reversal method shown in FIG. 15. Based on this, it is possible to estimate the position of the target M by performing the superimposing processing on the acquired data of the corresponding point, and also possible to perform the superimposing processing on only the point of the target M even when the reflection from the target M is weak. Thus, the target M can be detected in the minimum time.

Further, even if the distance resolution of each of the transmitters/receivers 1, 2, 3, ---, N is sacrificed for increasing the intensity, the position of the target M can be estimated by using the N-pieces (three or more) of the transmitters/receivers 1, 2, 3, ---, N.

Thereby, the target detection system for detecting the target M including each of a plurality of target-detecting transmitters/receivers 1, 2, 3, ---, N constituted with radars, sonar, or lidars can estimate the position of the target M even when the reflected wave from the target M is weak under an environment where multiple reflections are prominent. In this case, the acquired reflected signals may be integrated by a unit of time instead of integration by a unit of azimuth or may be integrated in both the azimuth and time unit.

Further, the target detection system TS according to the first exemplary embodiment calculates the optimum transmission timing from the positional relation between the detection areas and the transmitters/receivers. Thus, in this regards, the target M can be detected in the minimum time even in a case where the reflection from the target M is weak.

As an exemplary advantage according to the invention, the present invention is structured to place a plurality of same target detection transmitters/receivers constituted with radars, sonars, or lidars at different positions and to perform superimpose processing of information regarding waves reflected from a target acquired by each of the transmitters/receivers. Thus, for the reflected waves from the target under an environment where the multiple reflections by obstacles or the like are prominent, reception waves of higher level than surrounding noises can be acquired since the reception waves received at the plurality of transmitters/receivers are superimposed even though the level of the reception wave received at a single transmitter/receiver is weak. This makes it possible to provide an excellent target detection system, a detection method, and a detection information processing program, which can effectively and promptly estimate (detect) the position of the target.

(SECOND EXEMPLARY EMBODIMENT)

Next, a second exemplary embodiment of the present invention will be described.

The second exemplary embodiment shows an example of a case where the transmitter/receiver layout module 11 places all the transmitters/receivers so as not to be arranged on a straight line.

When three transmitters/receivers are placed on the sea surface, the distance to the target M on a straight line cannot be estimated if the three transmitters/receivers are lined on that straight line. Thus, the three transmitters/receivers are placed not to be lined on a straight line as shown in FIG. 6.

Regarding the layout state of the transmitters/receivers, it does not mean to place all of those transmitters/receivers 1, 2, 3, ---, N not to be lined on a straight line. For example, as shown in FIG. 6, it is fine to place the two transmitters/receivers 1, 2 out of the three transmitters/receivers 1, 2, 3 lined on a straight line if at least one transmitter/receiver 3 is not placed on that straight line.

Other structures and operating effects are the same as the case of the first exemplary embodiment described above.

(THIRD EXEMPLARY EMBODIMENT)

Next, a third exemplary embodiment of the present invention will be described.

Note here that same reference numerals are employed for the same structural members as those of the first exemplary embodiment.

The third exemplary embodiment shows a case of four or more transmitters/receivers that can only discriminate the azimuth for a specific rotation axis, in which the transmitter/receiver layout module 11 (see FIG. 1) arranges the transmitters/receivers in such a manner that all the transmitters/receivers 1, 2, 3, ---, N are not lined on a same plane.

Note here that "only the azimuth for a specific rotation axis can be discriminated" indicates a case where the azimuth of the horizontal direction can be discriminated but the azimuth of the perpendicular direction cannot be discriminated, for example. Such characteristic is often observed in sonars and radars. When a plurality of such transmitters/receivers are placed and if the axes of all the transmitters/receivers that can discriminate the azimuth are in the same direction, the azimuth for the axis orthogonal to the axis that can discriminate azimuth becomes unstable or becomes of low accuracy. Thus, through tilting the axis of at least one transmitter/receiver for discriminating the azimuth from the axes of the other transmitters/receiver, the position of the target can be estimated with high accuracy.

For example, in a case of using sonars which can discriminate the azimuth in the horizontal direction but cannot discriminate the azimuth in the perpendicular direction, the azimuth of the target in the horizontal direction can be found from each of the sonars and the point where the azimuths on the horizontal direction of the sonars cross with each other is where the target exists. However, the azimuth in the perpendicular direction is still unknown, and it is the same even if there are three or more sonars. Through tilting one of the sonars, the azimuth on a surface shifted from the horizontal surface can be known.

With the sonar that discriminates the azimuth in the horizontal direction, it is assumed that the target is within a fan shape (within a same distance) orthogonal to the horizontal surface. In the meantime, with the tilted sonar, the target is within a fan shape that is obliquely orthogonal to the horizontal surface. It is possible to specify the position of the target at the intersection point between the intersection line of two or more former fan shapes (fan shapes orthogonal to the horizontal surface) and the latter fan shape (fan shape obliquely orthogonal to the horizontal surface). Other structures and operating effects are the same as the case of the first exemplary embodiment.

(FOURTH EXEMPLARY EMBODIMENT)

Next, a fourth exemplary embodiment of the present invention will be described.

Note here that same reference numerals are employed for the same structural members as those of the first exemplary embodiment.

The fourth exemplary embodiment is so characterized that the position/attitude control modules 1d, 2d, 3d, ---, 4d of each of the transmitters/receivers 1, 2, 3, ---, N shown in FIG. 1 are structured to have a function of adjusting the position not only according to instructions set by the transmitter/receiver layout module 11 but by making judgment by themselves according to instructions loaded in advance.

With such structure, it is also possible to achieve the same operating effects as the case of the first exemplary embodiment described above. In addition, it becomes possible to detect the target M more promptly, since the individual own target capturing actions of each of the transmitters/receivers 1, 2, 3, ---, N can be tolerated.

Other structures and operating effects are the same as the case of the first exemplary embodiment.

(FIFTH EXEMPLARY EMBODIMENT)

Next, a fifth exemplary embodiment of the present invention will be described.

Note here that same reference numerals are employed for the same structural members as those of the first exemplary embodiment.

In the fifth exemplary embodiment, the transmitting/receiving module 1a shown in FIG. 1 calculates the amplifying rate of amplitude in such a manner that the reception intensity in each of the transmitters/receivers 1, 2, 3, ---, N becomes the optimum from the candidate coordinate and the positional relation of each of the transmitters/receivers 1, 2, 3, ---, N, and transmits the transmission waveform information and the time reversal waveform information with the amplifying rate. This is to increase the signal intensity of the reception side by supplementing the attenuation of the waveform information caused as it travels the distance.

The degree of attenuation can be calculated when the characteristic of the medium that transmits the transmission wave, each of the transmitters/receivers 1 to N, the target M, or the coordinate of the candidate of the target M (candidate coordinate) are known. However, regarding the transmission intensity, there is an upper limit in the energy that can be handled by the transmitter/receiver. Further, it is necessary to fully take the physical limit into consideration, i.e., to make sure that the transmitters/receivers do not break down, there is no change in the characteristic of the medium, etc.

An example of such change in the characteristic of the medium is generation of cavitation that is caused when the sonic wave intensity in a sonar is too large.

Other structures and operating effects are the same as the case of the first exemplary embodiment.

While the invention has been particularly shown and described with reference to exemplary embodiments thereof, the invention is not limited to these embodiments. It will be understood by those of ordinary skill in the art that various changes in form and details may be made therein without departing from the scope of the present invention as

**EP 2 426 508 B1**

defined by the claims.

The present invention is a technique applicable to all the signal propagation fields such as a measuring device, a detection device, and the like which transmit/receive signals via gases, liquids, vacuums, or the like, and the usages thereof are extremely wide.

**Claims**

1. A target detection system capable of detecting targets even in a case where a S/N ratio of a reflected wave is low, comprising:

   at least two target-detecting transceivers, in the following referred to as transmitters/receivers (1, 2, 3, ..., N), capable of performing azimuth setting, sectioning reflected time reversal signals stored in each of the transmitters/receivers (1, 2, 3, ..., N) by a time range and an azimuth range and performing integration, and placed at different placing positions from each other; and a main control device (10) comprising position calculating means (12) for specifying a position of a target based on reflection information regarding the azimuth of the target detected by each of the transmitters/receivers (1, 2, 3, ..., N) and a timing control module (13), wherein the position calculating means (12) i include a function configured to specify the position of the target through performing superimposing processing on information on a same coordinate, the information being obtained from the transmitters/receivers (1, 2, 3, ..., N) after sectioning the reflected time reversal signals stored in each of the transmitters/receivers (1, 2, 3, ..., N) by a time range and an azimuth range and performing integration, regarding the azimuth of the target acquired by the at least two transmitters/receivers (1, 2, 3, ..., N) on the basis of information regarding the position of each of the transmitters/receivers (1, 2, 3, ..., N);
   the timing control module (13) includes a function configured to calculate an optimum transmission timing of a transmission waveform information of the transmitter/receiver (1, 2, 3, ..., N) as the transmission timing from each piece of information regarding

   (a) the position of the transmitter/receiver (1, 2, 3, ..., N) acquired from a transmitter/receiver layout module (11) which gives instructions to each of the transmitters/receivers (1, 2, 3, ..., N) regarding the setting of the actual layout positions and attitudes of each of the transmitters/receivers (1, 2, 3, ..., N),
   (b) a coordinate acquired from the position calculating means (12), and
   (c) a given detection range or a detection range designated from outside successively, and
   the timing control module (13) being further configured to calculate an optimum timing for reversing the waveform as the reversal timing from each piece of information regarding (a) the position of the transmitter/receiver (1, 2, 3, ..., N) acquired from the transmitter/receiver layout module (11), (b) the coordinate acquired from the position calculating means (12), (c) the given detection range or the detection range designated by an external designating device successively, and (d) a previous transmission time, and informs the transmission timing and the reversal timing to the transmitting/receiving modules (Ia, 2a, 3a, ..., Na) of each the transmitters/receivers (1, 2, 3, ..., N); and

   wherein each of the transmitters/receivers (1, 2, 3,.... N) being configured to perform a transmission by amplifying an amplitude of the transmission waveform information at the transmission timing with a given amplifying rate, and each of the transmitters/receivers (1, 2, 3, ..., N) includes a time reversal signal transmitting and receiving function which, when each of the transmitters/receivers (1, 2, 3, ..., N) transmits a time reversal signal of a reflected signal by employing a time reversal method performed on the reflected signal from a target detection area towards the target detection area, transmits the time reversal signal by amplifying the amplitude of the time reversal signal at the reversal timing with the given amplifying rate, and an azimuth specifying function which specifies an azimuth of a second e-flected signal when the second reflected signal of the transmission time reversal signal is acquired from the target as an azimuth of the target at which the target exists.

2. The target detection system as claimed in claim 1, further comprising a further target-detecting transmitter/receiver (1, 2, 3, ..., N) including a same function as the function of each of the transmitters/receivers (1, 2, 3, ..., N) placed at a different position from the positions of each of the transmitters/receivers (1, 2, 3, ..., N) in addition, wherein the position calculating means (12) performs the superimposing processing on the information regarding the azimuth of the target acquired by at least three transmitters/receivers (1, 2, 3, ..., N) including the further transmitter/receiver (1, 2, 3, ..., N).

3. The target detection system as claimed in claim 1 or 2, wherein

the position calculating means (12) includes: an azimuth information superimposing processing function which performs superimposing processing on information regarding azimuths of given reception signals that is reflection information captured by the time reversal signal transmitting and receiving function on the basis of the coordinate positions of each of the transmitters/receivers (1, 2, 3, ..., N); and a target position estimating function which estimates a position of a high reflection level in a crossing area of each of the azimuths of the target acquired thereby as the position of the target.

4. The target detection system as claimed in claim 1 or 2, wherein each of the transmitters/receivers (1, 2, 3, ..., N) comprises:

a transmitting/receiving module (la, 2a, 3a, ..., Na) which is formed with one selected from a radar, a sonar, or a lidar which generates and transmits/receives a prescribed signal used for target detection;
signal reversing means (1b, 2b, 3b, ..., Nb) for accumulating waveform information received at the transmitting/receiving module (la, 2a, 3a, ..., Na), performing time reversal on the accumulated waveform information at a timing designated by the transmitting/receiving module (la, 2a, 3a, ..., Na), and transmitting it to the transmitting/receiving module (la, 2a, 3a, ..., Na) as a transmission time reversal signal acquired by the time reversal method;
signal integrating means (1c, 2c, 3c, ..., Nc) for sectioning waveform information of the reflected signal from the target detection area received at the transmitting/receiving module (la, 2a, 3a, ..., Na) by a time range and an azimuth range designated by the transmitting/receiving module (la, 2a, 3a, ..., Na) in advance, integrating each sectioned signal, and transmitting the integrated information to the position calculating means (12) according to an instruction of the transmitting/receiving module (la, 2a, 3a, ..., Na); and
a transmitter/receiver main body (1A, 2A, 3A, ..., NA) which holds each of those modules and means.

5. The target detection system as claimed in claim 4, wherein:

the main control device (10) comprises
transmitter/receiver layout means (11) for specifying at least two transmitters/receivers (1, 2, 3, ..., N) out of each of the plurality of transmitters/receivers (1, 2, 3, ..., N) based on an external instruction, and moving each of the two transmitters/receivers (1, 2, 3, ..., N) to designated positions by using power devices,
the position calculating means (12) for collecting information regarding the positions and attitudes of each of the specified transmitters/receivers (1, 2, 3, ..., N) as transmitter/receiver information, storing the information to a storage device provided in advance for calculating the target, and including the azimuth information superimposing processing function as well as the target position estimating function, and
signal output control means (13) for operating based on each piece of the transmitter/receiver information outputted from the position calculating means (12) and setting an output timing of a transmission signal containing a time reversal signal transmitted from each of the transmitters/receivers (1, 2, 3, ..., N); and
each of the transmitters/receivers (1, 2, 3, ..., N) comprises position/attitude setting control means (1d, 2d, 3d, ..., Nd) for specifying the information regarding the layout position and attitude of the transmitter/receiver main body (1A, 2A, 3A, ..., NA) based on GPS and positional information as well as motion record of the past and transmitting the information to the transmitter/receiver layout means (11).

6. The target detection system as claimed in claim 5, wherein
the transmitting/receiving module (1a, 2a, 3a, ..., Na) of each of the plurality of transmitters/receivers (1, 2, 3, ..., N) includes:

the time reversal signal transmitting/receiving function which operates based on an instruction of the signal output control means (13) of the main control device (10) to specify the time reversal signal regarding time reversal waveform information reversed by the signal reversing means (1b, 2b, 3b, ..., Nb) as the transmission signal for target detection and to transmit/receive the time reversal signal towards the target detection area;
the azimuth specifying function which specifies an azimuth when the time reversal signal is reflected at the target and a time reversal reflected signal is acquired as the azimuth at which the target exists; and
a function which transmits reception information from the target and the azimuth information specified above to the position calculating means (12) via the signal integrating means (1c, 2c, 3c, ..., Nc).

7. The target detection system as claimed in claim 5, wherein
the transmitter/receiver layout means (11) of the main control device (10) has a function which, when detecting the target by at least three or more transmitters/receivers (1, 2, 3, ..., N), gives an instruction to the position/attitude control setting means (1d, 2d, 3d, ..., Nd) provided to one transmitter/receiver (1, 2, 3, ..., N) to place at least that one transmitter/receiver (1, 2, 3, ..., N) out of each of the transmitters/receivers (1, 2, 3, ..., N) at a position different from positions of the other transmitters/receivers (1, 2, 3, ..., N) that are placed on a same straight line.

**Patentansprüche**

1. Zielerfassungssystem, das fähig ist, Ziele selbst in einem Fall zu erkennen, in dem ein S/N-Verhältnis einer reflektierten Welle niedrig ist, das Folgendes umfasst:

mindestens zwei zielerfassende Transceiver, im Folgenden als Sender/Empfänger (1, 2, 3, ..., N) bezeichnet, die fähig sind, eine Azimuteinstellung auszuführen, reflektierte Zeitumkehrsignale, die in jedem der Sender/Empfänger (1, 2, 3, ..., N) gespeichert sind, nach einem Zeitbereich und einem Azimutbereich zu unterteilen und Integration auszuführen, und die an voneinander unterschiedlichen Anordnungspositionen angeordnet sind; und eine Hauptsteuerungsvorrichtung (10), die Positionsberechnungsmittel (12) zum Bestimmen einer Position eines Ziels basierend auf Reflexionsinformationen hinsichtlich des Azimuts des Ziels, die durch jeden der Sender/Empfänger (1, 2, 3, ..., N) erfasst wurden, und ein Zeitsteuerungsmodul (13) umfasst, wobei das Positionsberechnungsmittel (12) eine Funktion einschließt, die zum Bestimmen der Position des Ziels durch Ausführen von Überlagerungsverarbeitung an Informationen an einer selben Koordinate konfiguriert ist, wobei die Informationen von den Sendern/Empfängern (1, 2, 3, ..., N) nach Unterteilen der reflektierten Zeitumkehrsignale, die in jedem der Sender/Empfänger (1, 2, 3, ..., N) gespeichert sind, nach einem Zeitbereich und einem Azimutbereich und Ausführen von Integration erhalten werden, hinsichtlich des Azimuts des Ziels, das durch die mindestens zwei Sender/Empfänger (1, 2, 3, ..., N) auf der Basis von Informationen hinsichtlich der Position von jedem der Sender/Empfänger (1, 2, 3, ..., N) erlangt wurde; das Zeitsteuerungsmodul (13) eine Funktion einschließt, die konfiguriert ist zum Berechnen eines optimalen Sendezeitpunkts einer Sendewellenforminformation des Senders/Empfängers (1, 2, 3, ..., N) als der Sendezeitpunkt aus jedem Teil an Informationen hinsichtlich

(a) der Position des Senders/Empfängers (1, 2, 3, ..., N), die von einem Sender-/Empfängeranordnungsmodul (11) erlangt wird, das jedem der Sender/Empfänger (1, 2, 3, ..., N) Anweisungen hinsichtlich der Einstellung der tatsächlichen Anordnungspositionen und Stellungen jedes der Sender/Empfänger (1, 2, 3, ..., N) gibt,
(b) einer Koordinate, die von dem Positionsberechnungsmittel (12) erlangt wurde, und
(c) eines gegebenen Erfassungsbereiches oder eines Erfassungsbereiches, der sukzessive von außen festgelegt wird, und das Zeitsteuerungsmodul (13) weiter konfiguriert ist, einen optimalen Zeitpunkt zum Umkehren der Wellenform als den Umkehrzeitpunkt aus jedem Teil von Informationen hinsichtlich (a) der Position des Senders/Empfängers (1, 2, 3, ..., N), die von dem Sender-/Empfängeranordnungsmodul (11) erlangt wurde,
(b) der Koordinate, die von dem Positionsberechnungsmittel (12) erlangt wurde, (c) des gegebenen Erfassungsbereichs oder des Erfassungsbereichs, der sukzessive durch eine externe Festlegungsvorrichtung festgelegt wurde, und (d) einer vorherigen Sendezeit zu berechnen und den Sendezeitpunkt und den Umkehrzeitpunkt an die Sende-/Empfangsmodule (1a, 2a, 3a, ..., Na) jedes der Sender/Empfänger (1, 2, 3, ..., N) mitzuteilen; und

wobei jeder der Sender/Empfänger (1, 2, 3, ..., N) dazu konfiguriert ist, ein Senden durchzuführen, indem eine Amplitude der Sendewellenforminformationen an dem Sendezeitpunkt mit einer gegebenen Verstärkungsrate verstärkt wird, und jeder der Sender/Empfänger (1, 2, 3, ..., N) eine Zeitumkehrsignalsende- und Empfangsfunktion einschließt, die, wenn jeder der Sender/Empfänger (1, 2, 3, ..., N) ein Zeitumkehrsignal eines reflektierten Signals durch Anwenden einer Zeitumkehrmethode, die an dem reflektierten Signal von einem Zielerfassungsbereich in Richtung des Zielerfassungsbereichs durchgeführt wird, sendet, das Zeitumkehrsignal sendet, indem die Amplitude des Zeitumkehrsignals an dem Umkehrzeitpunkt mit der gegebenen Verstärkungsrate verstärkt wird, und eine Azimutbestimmungsfunktion, die ein Azimut eines zweiten reflektierten Signals bestimmt, wenn das zweite reflektierte Signal des Sendezeitumkehrsignals von dem Ziel erlangt wird, als ein Azimut des Ziels, an dem das Ziel existiert.

2. Zielerfassungssystem gemäß Anspruch 1, das weiter zusätzlich einen weiteren zielerfassenden Sender/Empfänger (1, 2, 3, ..., N) umfasst, der eine selbe Funktion wie die Funktion jedes der Sender/Empfänger (1, 2, 3, ..., N) einschließt, der an einer von den Positionen jedes der Sender/Empfänger (1, 2, 3, ..., N) unterschiedlichen Position angeordnet ist, wobei das Positionsberechnungsmittel (12) die Überlagerungsverarbeitung an den Informationen hinsichtlich des Azimuts des Ziels, die durch mindestens drei Sender/Empfänger (1, 2, 3, ..., N) einschließlich des weiteren Senders/Empfängers (1, 2, 3, ..., N) erlangt wurden, durchführt.

3. Zielerfassungssystem gemäß Anspruch 1 oder 2, wobei das Positionsberechnungsmittel (12) einschließt: eine Überlagerungsverarbeitungsfunktion für Azimutinformationen, die eine Überlagerungsverarbeitung an Informationen durchführt, die Azimute gegebener Empfangssignale betreffen, d. h. Reflexionsinformationen, die durch die Zeitumkehrsignal-Sende- und Empfangsfunktion auf der Basis der Koordinatenpositionen jedes der Sender/Empfänger (1, 2, 3, ..., N) aufgenommen werden; und eine Zielpositionsschätzfunktion, die eine Position eines hohen Reflexionspegels in einem Kreuzungsbereich von jedem der Azimute des Ziels, die dadurch als die Position des Ziels erlangt wird, schätzt.

4. Zielerfassungssystem gemäß Anspruch 1 oder 2, wobei jeder der Sender/Empfänger (1, 2, 3, ..., N) umfasst:

   ein Sende-/Empfangsmodul (1a, 2a, 3a, ..., Na), das gebildet ist mit einem ausgewählt aus einem Radar, einem Sonar oder einem Lidar, das ein vorgeschriebenes Signal, das zur Zielerfassung verwendet wird, sendet/empfängt;
   ein Signalumkehrmittel (1b, 2b, 3b, ..., Nb) zum Sammeln von Wellenforminformationen, die an dem Sende-/Empfangsmodul (1a, 2a, 3a, ..., Na) empfangen werden, Durchführen von Zeitumkehr an den gesammelten Wellenforminformationen zu einem Zeitpunkt,
   der durch das Sende-/Empfangsmodul (1a, 2a, 3a, ..., Na) festgelegt wird, und Senden dieser an das Sende-/Empfangsmodul (1a, 2a, 3a, ..., Na) als ein Sendezeitumkehrsignal, das durch das Zeitumkehrverfahren erlangt wurde;
   ein Signalintegrationsmittel (1c, 2c, 3c, ..., Nc) zum Unterteilen von Wellenforminformationen des reflektierten Signals von dem Zielerfassungsbereich, das an dem Sende-/Empfangsmodul (1a, 2a, 3a, ..., Na) empfangen wird, nach einem Zeitbereich und einem Azimutbereich, die im Voraus durch das Sende-/Empfangsmodul (1a, 2a, 3a, ..., Na) festgelegt wurden, Integrieren jedes unterteilten Signals und Senden der integrierten Informationen an das Positionsberechnungsmittel (12) gemäß einer Anweisung des Sende-/Empfangsmoduls (1a, 2a, 3a, ..., Na); und
   einen Sender-/Empfängerhauptkörper (1A, 2A, 3A, ..., NA), der jedes dieser Module und Mittel aufnimmt.

5. Zielerfassungssystem gemäß Anspruch 4, wobei:

   die Hauptsteuerungsvorrichtung (10) umfasst
   ein Sender/Empfängeranordnungsmittel (11) zum Festlegen mindestens zweier Sender/Empfänger (1, 2, 3, ..., N) aus jedem der Anzahl an Sender/Empfänger (1, 2, 3, ..., N) basierend auf einer äußeren Anweisung und Bewegen jedes der zwei Sender/Empfänger (1, 2, 3, ..., N) zu festgelegten Positionen durch Verwendung von Antriebsvorrichtungen,
   das Positionsberechnungsmittel (12) zum Sammeln von Informationen hinsichtlich der Positionen und Stellungen von jedem der festgelegten Sender/Empfänger (1, 2, 3, ..., N) als Sender-/Empfängerinformationen, Speichern der Informationen in einer Speichervorrichtung, die im Voraus bereitgestellt wurde, zur Berechnung des Ziels und Einschließen der Überlagerungsverarbeitungsfunktion für Azimutinformationen sowie der Zielpositionsschätzfunktion und
   ein Signalausgabesteuerungsmittel (13) zum Betrieb basierend auf jedem Teil der Sender-/Empfängerinformationen, die von den Positionsberechnungsmittel (12) ausgegeben werden, und Einstellen eines Ausgabezeitpunkts eines Sendesignals, das ein Zeitumkehrsignal enthält, das von jedem der Sender/Empfänger (1, 2, 3, ..., N) gesendet wird; und
   jeder der Sender/Empfänger (1, 2, 3, ..., N) umfasst Positions- /Stellungseinstellungssteuerungsmittel (1d, 2d, 3d, ..., Nd) zum Festlegen der Informationen hinsichtlich der Anordnungsposition und Stellung des Sender-/Empfängerhauptkörpers (1A, 2A, 3A, ..., NA) basierend auf GPS und Positionsinformationen sowie Bewegungsaufzeichnungen der Vergangenheit und Senden der Informationen an das Sender-/Empfängeranordnungsmittel (11).

6. Zielerfassungssystem gemäß Anspruch 5, wobei das Sende-/Empfangsmodul (1a, 2a, 3a, ..., Na) von jedem der Anzahl an Sendern/Empfängern (1, 2, 3, ..., N) einschließt:

   die Zeitumkehrsignal-Sende-/Empfangsfunktion, die basierend auf einer Anweisung des Signalausgabesteuerungsmittels (13) der Hauptsteuerungsvorrichtung (10) zum Festlegen des Zeitumkehrsignals hinsichtlich der Zeitumkehrwellenforminformationen, umgekehrt durch das Signalumkehrmittel (1b, 2b, 3b, ..., Nb), als das Sendesignal zur Zielerfassung und zum Senden/Empfangen des Zeitumkehrsignals in Richtung des Zielerfassungsbereichs arbeitet;

die Azimutfestlegungsfunktion, die einen Azimut festlegt, wenn das Zeitumkehrsignal an dem Ziel reflektiert wird und ein reflektiertes Zeitumkehrsignal als das Azimut, an dem das Ziel vorhanden ist, erlangt wird; und eine Funktion, die Empfangsinformationen von dem Ziel und die oben festgelegten Azimutinformationen mittels des Signalintegrationsmittels (1c, 2c, 3c, ..., Nc) an das Positionsberechnungsmittel (12) sendet.

**7.** Zielerfassungssystem gemäß Anspruch 5, wobei das Sender-/Empfängeranordnungsmittel (11) der Hauptsteuerungsvorrichtung (10) eine Funktion aufweist, die, wenn das Ziel durch mindestens drei oder mehr Sender/Empfänger (1, 2, 3, ..., N) erfasst wird, eine Anweisung an das Positions-/Stellungssteuerungseinstellmittel (1d, 2d, 3d, ..., Nd), das für einen Sender/Empfänger (1, 2, 3, ..., N) bereitgestellt ist, gibt, mindestens jenen einen Sender/Empfänger (1, 2, 3, ..., N) von jedem der Sender/Empfänger (1, 2, 3, ..., N) an einer Position anzuordnen, die sich von Positionen der anderen Sender/Empfänger (1, 2, 3, ..., N), die auf derselben geraden Linie angeordnet sind, unterscheidet.

## Revendications

**1.** Système de détection de cible capable de détecter des cibles même dans le cas où : un rapport S/B d'une onde réfléchie est faible, comprenant :

au moins deux émetteurs/récepteurs de détection de cible, appelés ci-après émetteurs/récepteurs (1, 2, 3, ..., N), capables d'effectuer une définition d'azimut, segmenter des signaux d'inversion temporelle réfléchis stockés dans chacun des émetteurs/récepteurs (1, 2, 3, ..., N) par un intervalle de temps et une plage d'azimut et effectuer une intégration, et placés à des positions de placement différentes les unes des autres ; et un dispositif de commande principal (10) comprenant un moyen de calcul de position (12) pour spécifier une position d'une cible sur la base d'informations de réflexion concernant l'azimut de la cible détecté par chacun des émetteurs/récepteurs (1, 2, 3, ..., N) et un module de commande de temporisation (13), dans lequel le moyen de calcul de position (12) comprend une fonction configurée pour spécifier la position de la cible en effectuant un traitement de superposition sur des informations sur une même coordonnée, les informations étant obtenues à partir des émetteurs/récepteurs (1, 2, 3, ..., N) après segmentation des signaux d'inversion temporelle réfléchis stockés dans chacun des émetteurs/récepteurs (1, 2, 3, ..., N) par un intervalle de temps et une plage d'azimut et en effectuant une intégration, concernant l'azimut de la cible acquis par les au moins deux émetteurs/récepteurs (1, 2, 3, ..., N) sur la base d'informations concernant la position de chacun des émetteurs/récepteurs (1, 2, 3, ..., N) ;

le module de commande de temporisation (13) comprend une fonction configurée pour calculer une temporisation d'émission optimale d'informations de forme d'onde d'émission de l'émetteur/récepteur (1, 2, 3, ..., N) en tant que temporisation d'émission à partir de chaque élément d'informations concernant

(a) la position de l'émetteur/récepteur (1, 2, 3, ..., N) acquise à partir d'un module de disposition d'émetteur/récepteur (11) qui donne des instructions à chacun des émetteurs/récepteurs (1, 2, 3, ..., N) concernant la définition des positions et attitudes de dispositif réelles de chacun des émetteurs/récepteurs (1, 2, 3, ..., N),
(b) une coordonnée acquise à partir du moyen de calcul de position (12), et
(c) une plage de détection donnée ou une plage de détection désignée depuis l'extérieur successivement, et le module de commande temporisé (13) étant en outre configuré pour calculer une temporisation optimale pour inverser la forme d'onde en tant que temporisation d'inversion à partir de chaque élément d'informations concernant

(a) la position de l'émetteur/récepteur (1, 2, 3, ..., N) acquise à partir du module de disposition d'émetteur/récepteur (11), (b) la coordonnée acquise à partir du moyen de calcul de position (12), (c) la plage de détection donnée ou la plage de détection désignée par un dispositif de désignation externe successivement, et (d) un temps d'émission précédent, et transmet la temporisation d'émission et la temporisation d'inversion aux modules d'émission/réception (Ia, 2a, 3a, ..., Na) de chacun des émetteurs/récepteurs (1, 2, 3, ..., N) ; et dans lequel

chacun des émetteurs/récepteurs (1, 2, 3, ..., N) est configuré pour effectuer une émission par amplification d'une amplitude des informations de forme d'onde d'émission à la temporisation d'émission avec un taux d'amplification donné, et

chacun des émetteurs/récepteurs (1, 2, 3, ..., N) comprend une fonction d'émission et de réception de signal d'inversion temporelle qui, lorsque chacun des émetteurs/récepteurs (1, 2, 3, ..., N) émet un signal d'inversion temporelle d'un signal réfléchi au moyen d'un procédé d'inversion temporelle conduit sur le signal réfléchi depuis une zone de détection de cible vers la zone de détection de cible, émet le signal d'inversion temporelle par amplification de l'amplitude du signal d'inversion temporelle à la temporisation d'inversion avec le taux d'amplification donné, et une fonction de spécification d'azimut qui spécifie un azimut d'un deuxième signal réfléchi lorsque le deuxième signal réfléchi du signal d'inversion temporelle d'émission est acquis à partir de la cible comme étant un azimut de la cible au niveau duquel la cible existe.

2. Système de détection de cible selon la revendication 1, comprenant en outre un émetteur/récepteur de détection de cible supplémentaire (1, 2, 3, ..., N) comprenant une fonction identique à la fonction de chacun des émetteurs/récepteurs (1, 2, 3, ..., N) placés à une position différente des positions de chacun des émetteurs/récepteurs (1, 2, 3, ..., N) en outre, dans lequel

le moyen de calcul de position (12) effectue le traitement de superposition sur les informations concernant l'azimut de la cible acquis par au moins trois émetteurs/récepteurs (1, 2, 3, ..., N) comprenant l'émetteur/récepteur supplémentaire (1, 2, 3, ... , N).

3. Système de détection de cible selon la revendication 1 ou 2, dans lequel

le moyen de calcul de position (12) comprend : une fonction de traitement de superposition d'informations d'azimut qui effectue un traitement de superposition sur des informations concernant des azimuts de signaux de réception donnés qui sont des informations de réflexion capturées par la fonction d'émission et de réception de signal d'inversion temporelle sur la base des positions de coordonnées de chacun des émetteurs/récepteurs (1, 2, 3, ..., N) ; et une fonction d'estimation de position de cible qui estime une position d'un taux de réflexion élevé dans une zone de croisement de chacun des azimuts de la cible acquis ainsi en tant que position de la cible.

4. Système de détection de cible selon la revendication 1 ou 2, dans lequel chacun des émetteurs/récepteurs (1, 2, 3, ..., N) comprend :

un module d'émission/réception (la, 2a, 3a, ..., Na) qui est formé avec l'un choisi parmi un radar, un sonar ou un lidar qui génère et émet/reçoit un signal prescrit utilisé pour la détection de cible ;
un moyen d'inversion de signal (1b, 2b, 3b, ..., Nb) pour accumuler des informations de forme d'onde reçues au niveau du module d'émission/réception (la, 2a, 3a, ..., Na), effectuer une inversion temporelle sur les informations de forme d'onde accumulées à une temporisation désignée par le module d'émission/réception (la, 2a, 3a, ..., Na), et transmettre de celles-ci au module d'émission/réception (la, 2a, 3a, ..., Na) sous la forme d'un signal d'inversion temporelle de transmission acquis par le procédé d'inversion temporelle ;
un moyen d'intégration de signal (1c, 2c, 3c, ..., Nc) pour segmenter les informations de forme d'onde du signal réfléchi depuis la zone de détection de cible reçu au niveau du module d'émission/réception (la, 2a, 3a, ..., Na) par un intervalle de temps et une plage d'azimut désignée par le module d'émission/réception (la, 2a, 3a, ..., Na) à l'avance,
intégrer chaque signal segmenté, et transmettre les informations intégrées au moyen de calcul de position (12) conformément à une instruction du module d'émission/réception (la, 2a, 3a, ..., Na) ; et
un corps principal d'émetteur/récepteur (1A, 2A, 3A, ..., NA) qui contient chacun de ces modules et moyens.

5. Système de détection de cible selon la revendication 4, dans lequel :

le dispositif de commande principal (10) comprend un moyen de disposition d'émetteur/récepteur (11) pour spécifier au moins deux émetteurs/récepteurs (1, 2, 3, ..., N) parmi chacun de la pluralité d'émetteurs/récepteurs (1, 2, 3, ..., N) sur la base d'une instruction externe, et déplacer chacun des deux émetteurs/récepteurs (1, 2, 3, ..., N) à des positions désignées au moyen de dispositifs d'alimentation,
un moyen de calcul de position (12) pour collecter des informations concernant les positions et les attitudes de chacun des émetteurs/récepteurs (1, 2, 3, ..., N) spécifiés en tant qu'informations d'émetteur/récepteur, stocker les informations dans un dispositif de stockage fourni à l'avance pour calculer la cible, et comprenant la fonction de traitement de superposition d'informations d'azimut ainsi que la fonction d'estimation de position de cible, et
un moyen de commande de sortie de signal (13) pour fonctionner sur la base de chaque élément des informations d'émetteur/récepteur transmis par le moyen de calcul de position (12) et définir une temporisation de sortie d'un signal d'émission contenant un signal d'inversion temporelle transmis depuis chacun des émetteurs/récepteurs (1, 2, 3, ..., N) ; et

chacun des émetteurs/récepteurs (1, 2, 3, ..., N) comprend un moyen de commande de définition de position/attitude (1d, 2d, 3d, ..., Nd) pour spécifier les informations concernant la position et l'attitude de disposition du corps principal d'émetteur/récepteur (1A, 2A, 3A, ..., NA) sur la base d'informations GPS et de position ainsi que l'enregistrement de mouvement du passé et transmettre les informations au moyen de disposition d'émetteur/récepteur (11).

6. Système de détection de cible selon la revendication 5, dans lequel
le module d'émission/réception (la, 2a, 3a, ..., Na) de chacun de la pluralité d'émetteurs/récepteurs (1, 2, 3, ..., N) comprend :

la fonction d'émission/réception de signal d'inversion temporelle qui fonctionne sur la base d'une instruction du moyen de commande de sortie de signal (13) du dispositif de commande principal (10) pour spécifier le signal d'inversion temporelle concernant les informations de forme d'onde d'inversion temporelle inversée par le moyen d'inversion de signal (1b, 2b, 3b, ..., Nb) en tant que signal d'émission pour la détection de cible et pour émettre/recevoir le signal d'inversion temporelle vers la zone de détection de cible ;
la fonction de spécification d'azimut qui spécifie un azimut lorsque le signal d'inversion temporelle est réfléchi au niveau de la cible et un signal d'inversion temporelle réfléchi est acquis comme étant l'azimut au niveau duquel la cible existe ; et
une fonction qui transmet des informations de réception provenant de la cible et les informations d'azimut spécifiées ci-dessus au moyen de calcul de position (12) par l'intermédiaire du moyen d'intégration de signal (1c, 2c, 3c, ..., Nc).

7. Système de détection de cible selon la revendication 5, dans lequel
le moyen de disposition d'émetteur/récepteur (11) du dispositif de commande principal (10) comporte une fonction qui, lors de la détection de la cible par au moins trois ou plus de trois émetteurs/récepteurs (1, 2, 3, ..., N), donne une instruction au moyen de définition de commande de position/attitude (1d, 2d, 3d, ..., Nd) disposé au niveau d'un émetteur/récepteur (1, 2, 3, ..., N) pour placer au moins ledit émetteur/récepteur (1, 2, 3, ..., N) parmi chacun des émetteurs/récepteurs (1, 2, 3, ..., N) à une position différente des positions des autres émetteurs/récepteurs (1, 2, 3, ..., N) qui sont placés sur une même ligne droite.

# FIG. 1

# FIG. 2

TIMING CONTROL MODULE — 13

POSITION CALCULATING MODULE — 12

TRANSMITTER/ RECEIVER LAYOUT MODULE — 11

10

SIGNAL REVERSING MODULE — 1b

TRANSMITTING/ RECEIVING MODULE — 1a

SIGNAL INTEGRATING MODULE — 1c

1d (POSITION/ATTITUDE SETTING MODULE)

POSITION/ ATTITUDE SENSOR — $1d_{01}$

MAIN BODY MOVING POWER DEVICE — $1d_{02}$

EXTERNAL COMMUNICATION MODULE — $1d_{03}$

ARITHMETIC OPERATION CONTROL SECTION — $1d_{04}$

1

# FIG. 3A

# FIG. 3B

# FIG. 4

COORDINATE POSITION OF
TRANSMITTER/RECEIVER 1: $(x_1, y_1) = (0, 0)$

COORDINATE POSITION OF
TRANSMITTER/RECEIVER 2: $(x_2, y_2) = (L, 0)$

COORDINATE POSITION
OF TARGET M: $(x, y)$

# FIG. 5

COORDINATE POSITION OF
TRANSMITTER/RECEIVER 1: $(x_1, y_1) = (0, 0)$

COORDINATE POSITION OF
TRANSMITTER/RECEIVER 2: $(x_2, y_2) = (L, 0)$

COORDINATE POSITION OF
TRANSMITTER/RECEIVER 3: $(x_3, y_3)$

COORDINATE POSITION
OF TARGET M: $(x, y)$

# FIG. 6

# FIG. 7

COORDINATE POSITION OF TRANSMITTER/RECEIVER 1: $(x_1, y_1, z_1) = (0,0,0)$

COORDINATE POSITION OF TRANSMITTER/RECEIVER 2: $(x_2, y_2, z_2) = (L,0,0)$

COORDINATE POSITION OF TARGET M: $(x,y,z)$

# FIG. 8

COORDINATE POSITION OF
TRANSMITTER/RECEIVER 1: $(x_1, y_1, z_1) = (0,0,0)$

COORDINATE POSITION OF
TRANSMITTER/RECEIVER 2: $(x_2, y_2, z_2) = (L,0,0)$

COORDINATE POSITION OF
TRANSMITTER/RECEIVER 3: $(x_3, y_3, z_3)$

COORDINATE POSITION
OF TARGET M: $(x, y, z)$

# FIG. 9

START

MAIN CONTROL DEVICE SPECIFIES PLURAL (E.G., TWO) TRANSMITTERS/RECEIVERS 1, 2 — S101

EACH OF TRANSMITTERS/RECEIVERS 1, 2 SPECIFIES OWN LAYOUT POSITION AND ATTITUDE (FACING DIRECTION) — S102

STORE POSITIONAL INFORMATION AND ATTITUDE INFORMATION OF EACH OF TRANSMITTERS/RECEIVERS 1, 2 FOR CALCULATING TARGET — S103

SPECIFY WAVEFORM INFORMATION OF TRANSMISSION SIGNALS OUTPUTTED FROM EACH OF TRANSMITTERS/RECEIVERS 1, 2 (SAME OR DIFFERENT WAVEFORM INFORMATION) — S104

EACH OF TRANSMITTERS/RECEIVERS 1, 2 GENERATES TRANSMISSION SIGNALS BASED ON SPECIFIED WAVEFORM INFORMATION — S105

STORE REFLECTED SIGNALS ACQUIRED BY TRANSMITTING/RECEIVING GENERATED TRANSMISSION SIGNALS TOWARDS TARGET M, AND GENERATE TIME REVERSAL SIGNALS BY PERFORMING TIME REVERSAL TO BE RE-TRANSMISSION SIGNALS(SPECIFICATION OF TRANSMISSION SIGNALS) — S106

TRANSMIT/RECEIVE RE-TRANSMISSION SIGNALS CONSTITUTED WITH TIME REVERSAL SIGNALS TOWARDS TARGET M, AND STORE ACQUIRED REFLECTED TIME REVERSAL SIGNALS BY EACH OF TRANSMITTERS/RECEIVERS 1, 2 — S107

SECTION REFLECTED TIME REVERSAL SIGNALS STORED IN EACH OF TRANSMITTERS/RECEIVERS 1, 2 BY TIME RANGE AND AZIMUTH RANGE, PERFORM INTEGRATION, RESPECTIVELY, AND EXECUTE SUPERIMPOSING PROCESSING THEREOF ON SAME COORDINATE — S108

POSITION CALCULATING MODULE 12 ESTIMATES COORDINATE POSITION OF HIGH REFLECTION LEVEL ACQUIRED BY SUPERIMPOSING PROCESSING AS POSITION OF TARGET M — S109

# FIG. 10

START

S201 — STORE WAVEFORM INFORMATION IN ADVANCE

S202 — TRANSMISSION TIMING SIGNAL HAS BEEN INPUTTED FROM TIMING CONTROL MODULE 13 ? → N

↓ Y

S203 — READ OUT STORED WAVEFORM INFORMATION AND AMPLIFY IT TO GENERATE TRANSMISSION SIGNAL

S204 — TRANSMIT TRANSMISSION SIGNAL TOWARDS TARGET

S205 — STANDBY TIME t HAS PASSED ? → N

↓ Y

S206 — SEND INSTRUCTION TO START ACCUMULATION TO SIGNAL REVERSING MODULE 1b TO START RECEPTION OF REFLECTED WAVE FROM TARGET M

S207 — RECEIVE REFLECTED WAVE FROM TARGET M AND ACCUMULATE IT TO SIGNAL REVERSING MODULE 1b AS RECEPTION SIGNAL

S208 — TRANSMISSION TIMING SIGNAL AND INSTRUCTION OF TIME RANGE FOR TIME REVERSAL HAVE BEEN INPUTTED FROM TIMING CONTROL MODULE 13 ? → N

↓ Y

S209 — GIVE INSTRUCTION TO SIGNAL REVERSING MODULE 1b TO PERFORM TIME REVERSAL OF ACCUMULATED RECEPTION SIGNAL

S210 — RECEIVE TIME-REVERSED REVERSAL SIGNAL FROM SIGNAL REVERSING MODULE 1b

A

TIME REVERSAL

S211 — AMP TIME-REVERSED SIGNAL TO GENERATE TIME REVERSAL TRANSMISSION SIGNAL

S212 — TRANSMIT TIME REVERSAL TRANSMISSION SIGNAL TOWARDS TARGET M AT REVERSAL TIMING DESIGNATED BY TIMING CONTROL MODULE 13

S213 — STANDBY TIME t HAS PASSED ? → N

↓ Y

S214 — RECEIVE REFLECTED WAVE FROM TARGET M AND GIVE IT TO SIGNAL INTEGRATING MODULE 1c AS TIME REVERSAL REFLECTED SIGNAL

S215 — SIGNAL INTEGRATING MODULE 1c SECTIONS RECEIVED TIME REVERSAL REFLECTED SIGNAL BY DESIGNATED TIME RANGE AND AZIMUTH RANGE, INTEGRATES SIGNALS, AND ACQUIRES INTENSITY DISTRIBUTION BY EACH DISTANCE AND AZIMUTH AS WAVEFORM INTENSITY DATA

S216 — SIGNAL INTEGRATING MODULE 1c TRANSMITS WAVEFORM INTENSITY DATA TO POSITION CALCULATING MODULE 12 OF MAIN CONTROL DEVICE 10

B

# FIG. 11

START

SPECIFY INFORMATION REGARDING POSITION
AND ATTITUDE OF TRANSMITTER/RECEIVER 1 ⟶ S221

GIVE SPECIFIED INFORMATION REGARDING
POSITION AND ATTITUDE OF TRANSMITTER/RECEIVER 1 ⟶ S222
TO TRANSMITTER/RECEIVER LAYOUT MODULE 11

MOVE TRANSMITTER/RECEIVER 1 TO
POSITION DESIGNATED BY TRANSMITTER/RECEIVER ⟶ S223
LAYOUT MODULE 11 BY USING POWER DEVICE

END

# FIG. 12

$$cT1+cT2=cT3+cT4=cT$$

# FIG. 13

$$cT1+cT2=cT3+cT4=cT$$

$$cU1+cU2=cU$$

# FIG. 14

(1) FIRST TRANSMISSION TRANSMISSION SIGNAL

TRANSMITTER/ RECEIVER                    M

(2) FIRST RECEPTION

TRANSMITTER/ RECEIVER                    M

$\tau$

REFLECTED WAVE

(3) SECOND TRANSMISSION AFTER TIME REVERSAL

TRANSMITTER/ RECEIVER                    M

TIME REVERSAL TRANSMISSION SIGNAL

(4) SECOND RECEPTION

TRANSMITTER/ RECEIVER                    M

REFLECTED WAVE TIME REVERSAL SIGNAL

# FIG. 15

(1) FIRST TRANSMISSION

TRANSMITTER/
RECEIVER

TRANSMISSION
SIGNAL

M

$\tau$ ?

(2) FIRST RECEPTION

TRANSMITTER/
RECEIVER

M

REFLECTED
WAVE

(3) SECOND TRANSMISSION AFTER
TIME REVERSAL

TRANSMITTER/
RECEIVER

M

REVERSAL
TRANSMISSION SIGNAL

(4) SECOND RECEPTION

TRANSMITTER/
RECEIVER

M

REFLECTED WAVE
TIME REVERSAL SIGNAL

**EP 2 426 508 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008249532 A
- JP 2009041981 A
- WO 2010067057 A2
- WO 0109641 A1
- WO 2008031896 A1
- US 4806936 A
- US 5486833 A
- US 2005146433 A1

**Non-patent literature cited in the description**

- **Y. TSURUGAYA ; T. KIKUCHI ; K. MIZUTANI.** Focal Depth Shifting of Phase-Conjugate Wave in Pekeris Waveguide. *J. J. A. P.,* 2008, vol. 47 (5), 4339-4343